# EUROPÄISCHE PATENTSCHRIFT

(11) **EP 3 168 032 B1**
(45) Veröffentlichungstag und Bekanntmachung des Hinweises auf die Patenterteilung: **27.02.2019**
(21) Anmeldenummer: 16198656.7
(22) Anmeldetag: 14.11.2016
(51) Int. Cl.: B29C 65/18, B65B 51/10, B65B 51/14, B65B 51/30, B65B 57/00

(54) **FÜGEVORRICHTUNG UND FÜGEVERFAHREN**
JOINING DEVICE AND JOINING METHOD
DISPOSITIF ET PROCÉDÉ D'ASSEMBLAGE

(30) Priorität: 13.11.2015 DE 102015119688
(43) Veröffentlichungstag der Anmeldung: 17.05.2017
(73) Patentinhaber: Fraunhofer-Gesellschaft zur Förderung der angewandten Forschung e.V., 80686 München (DE)
(72) Erfinder: Wendt, Gregor, 04910 Elsterwerda (DE); Jänchen, Ralph, 01309 Dresden (DE); Fromm, Alexander, 79224 Umkirch (DE)
(74) Vertreter: Pfenning, Meinig & Partner mbB

(56) Entgegenhaltungen:
- JP-B2- 3 032 487

## Beschreibung

Die Erfindung betrifft eine Fügevorrichtung und ein Fügeverfahren. Derartige Fügevorrichtungen und Fügeverfahren eignen sich insbesondere zum kontaktbehaftete Fügen flexibler Materialien, z. B. zum thermischen Fügen polymerbasierter Verbundfolien.

Für das Herstellen und Verschließen von Verpackungen sowie für das Herstellen technischer Güter oder Teilen davon wird überwiegend das Wärmekontaktverfahren (ca. 90-95% Marktanteil) eingesetzt. Dauerbeheizte Werkzeuge schmelzen dabei Folienschichten auf und verbinden diese, wie dies z.B. in EP 0 962 388 A1 beschrieben ist. Darüber hinaus gibt es adäquate Fügeverfahren, die ohne Einwirkung von Wärme auskommen, bei denen aber Wärme entstehen kann.

Die Sicherheit und Qualität der Fügenaht hängt insbesondere von der exakten Einhaltung der Prozessparameter und der Beschaffenheit der Nahtzone unmittelbar vor der Nahtbildung ab. So führen eine zu geringe Temperatur und/oder ein zu geringer Druck zu fehlender oder ungenügender Nahtfestigkeit und -dichtheit. Zu hohe Werte können dagegen in Verbrennungen oder mechanischer Zerstörung des Nahtbereiches resultieren.

Kontaminationen, die vor oder während des Abfüllprozesses in den Nahtbereich gelangen, sind häufig Ursache für undichte und optisch inakzeptable Nähte. Dies führt zu Ausschuss. Beruht die Kontamination auf einem Prozessfehler, wird dieser oft erst sehr viel später durch stichprobenartige Kontrollen erkannt, so dass zwischenzeitlich eine Vielzahl von Packungseinheiten produziert wird, bis der Fehler erkannt und abgestellt werden kann. Dies gilt ebenso für unerwünschte Faltenbildung oder für das unerwünschte Einbetten von Füllgut im Nahtbereich.

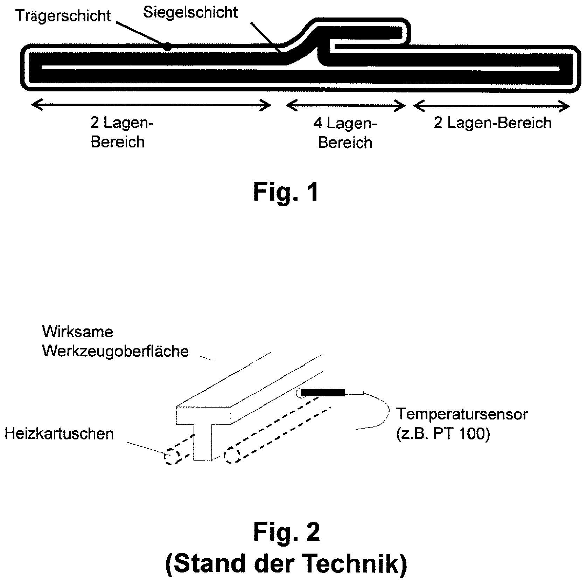

Komplexe Packungsgeometrien weisen heute meist Übergänge von zwei auf drei oder vier Materiallagen auf, was insbesondere bei sehr dünnen Materialien wie z.B. Polypropylenfolien eine besondere Anforderung an die Prozessbeherrschung stellt. Diese sogenannten Lagensprünge können im Kreuzungsbereich von Längs- und Quernähten sowie an vorgesehenen Seitenfalten auftreten und sind aufgrund mangelnden Schmelzeflusses und/oder hoher Rückstellkräfte des Packmittels sehr oft Orte undichter Nähte. Fig. 1 zeigt dazu beispielhaft in schematischer Darstellung einen Lagensprung im Kreuzungsbereich von Längs- und Quernaht eines Beutels aus Kunststoffverbundfolie. Die Position der Lagensprünge kann bei hochdynamischen Prozessen schwanken. Dennoch muss vorzugsweise gewährleistet bleiben, dass der Zweilagenbereich in dem schmalen Prozessfenster für den Energieeintrag (Fügetemperatur und -zeit) hinreichend aufgeschmolzen und verbunden wird, ohne dass der Drei- oder Vierlagenbereich Schaden nimmt.

Das Risiko vorgenannter fehlender Fügenahtintegritäten besteht im vorzeitigen Funktionsausfall von technischen Bauteilen, wie Vakuumisolationspanelen oder Akkumulatoren, im Verlust von verpackten Produkten bzw. der Schädigung der Umwelt durch selbige oder dem vorzeitigen Verderb z.B. von verpackten Lebensmitteln. Besonders MAP-Verpackungen (Modified Atmosphere Packaging - unter Schutzgas verpackte Lebensmittel) weisen bei Probennahmen aus dem Handel oft eine nur unzureichende Packungsintegrität auf, so dass die verpackten Produkte ggf. nicht mehr vor chemischem, mikrobiellem und enzymatischem Verderb geschützt sind und die vorgegebene Mindesthaltbarkeit dieser Produkte nicht immer sichergestellt ist.

Aufgrund von ökonomischen und umweltpolitischen Anforderungen kommen beim Verpacken immer dünnere Materialien zum Einsatz, die mit immer höherer Geschwindigkeit verarbeitet werden müssen. Dies stellt Anforderungen an die Erfassung der Prozessparameter, an die Prozessüberwachung und - regelung. Viele Sensoren, wie z.B. die platinbasierten PT100- oder PT1000-Temperaturfühler, können diese Anforderungen oft nicht mehr erfüllen. Diese Sensoren sind zudem nur punktuell und wirkstellenfern, d.h. einige Millimeter oder gar Zentimeter von der Fügestelle entfernt angeordnet, und reagieren damit nur sehr träge auf Veränderungen in Hochgeschwindigkeitsprozessen (z.B. Schlauchbeutelmaschine mit 280 Takten/min oder Flowpacker mit 1500 Takten/min).

Um die Sicherheit und Haltbarkeit von Produkten zu garantieren, müssen insbesondere die Fügenähte hohen Qualitätsanforderungen genügen. Hierfür sind die relevanten Prozessparameter, maßgeblich Fügetemperatur, -druck und -zeit möglichst exakt einzuhalten oder qualitätsrelevante Faktoren, wie z. B. der Fügeweg zu überwachen. Bisher müssen die Fügenähte dazu in einem separaten Prozessschritt manuell oder automatisiert geprüft werden. Dies kann physikalisch bedingt nur als Sammelpackungsprüfung oder stichprobenartig mit vergleichsweise groben Messmethoden erfolgen, z.B. mittels Wasserbadtest (Exsikkator) oder mittels mechanischer Prüfung. Methoden wie Druckabfallprüfung, wasserstoffbasierte Dichtheitsprüfung oder dergleichen sind ebenfalls zeitaufwendig, nur bedingt inlinegeeignet, erfordern spezifisches Know-How und sind daher wenig produktionstauglich. Auf diese Weise können Prozessabweichungen und deren Ursache bisher nur zeitversetzt identifiziert werden, so dass bis dahin bereits eine große Menge undichter Packungen produziert wird, die samt Inhalt entsorgt werden muss oder im ungünstigsten Fall den Weg zum Verbraucher findet.

Beim am weitesten verbreiteten Fügeverfahren, dem Wärmekontaktverfahren, aber auch dem Kaltfügen, besteht bislang keine technische Lösung einer zeitnahen, unmittelbaren Inlinekontrolle der Fügenaht. Die Fügewerkzeuge werden derzeit üblicherweise vollflächig gleichmäßig beheizt und mit einer integralen Temperaturerfassung ausgestattet, wie z.B. in EP1611013B1 beschrieben. Fig. 2 zeigt dazu beispielhaft die Anordnung eines Temperaturmessfühlers im Inneren eines Fügewerkzeuges weit hinter der relevanten Werkzeugoberfläche.

Dokument JP 3 032487 B2 offenbart eine Fügevorrichtung mit einer ersten Werkzeughälfte und mit wenigstens einem ersten Dünnschichtsensor, wobei der wenigstens eine erste Dünnschichtsensor eingerichtet ist, während eines Fügeprozesses wenigstens einen Prozessparameterwert wenigstens eines Prozessparameters vorzugsweise kontinuierlich zu erfassen. Der vorliegenden Erfindung liegt somit die Aufgabe zugrunde, eine Fügevorrichtung und ein Fügeverfahren zu entwickeln, die eine möglichst genaue, zuverlässige und zeitnah durchführbare Kontrolle der Qualität der Fügenaht oder zumindest der Prozessparameter gewährleisten.
Diese Aufgabe wird gelöst durch eine Fügevorrichtung und ein Fügeverfahren gemäß den unabhängigen Ansprüchen. Spezielle Ausgestaltungen sind in den Unteransprüchen beschrieben.
Vorgeschlagen wird eine Fügevorrichtung, die insbesondere zum kontaktbehafteten Fügen flexibler Materialien ausgebildet ist, z. B. zum kontaktbehafteten thermischen Fügen polymerbasierter Verbundfolien. Die vorgeschlagene Fügevorrichtung weist wenigstens eine erste Werkzeughälfte und wenigstens einen an einer Oberfläche der ersten Werkzeughälfte angeordneten ersten Dünnschichtsensor auf. Die Oberfläche der ersten Werkzeughälfte kann z. B. eine Fügeoberfläche oder eine seitliche Oberfläche der ersten Werkzeughälfte sein. Der wenigstens eine erste Dünnschichtsensor ist eingerichtet, während eines Fügeprozesses wenigstens einen Prozessparameterwert wenigstens eines Prozessparameters vorzugsweise kontinuierlich zu erfassen.
Ferner wird vorliegend ein Fügeverfahren vorgeschlagen, insbesondere zum kontaktbehafteten Fügen flexibler Materialien, z. B. zum kontaktbehafteten thermischen Fügen polymerbasierter Verbundfolien. Das vorgeschlagene Fügeverfahren umfasst wenigstens die folgenden Schritte:
Erfassen, vorzugsweise kontinuierliches Erfassen wenigstens eines Prozessparameterwertes wenigstens eines Prozessparameters an der Oberfläche der ersten Werkzeughälfte mittels des wenigstens einen ersten Dünnschichtsensors, insbesondere unmittelbar vor dem Fügeprozess und/oder während des Fügeprozesses und/oder unmittelbar nach dem Fügeprozess.

Der Begriff flexibles Material kann dabei insbesondere Folgendes umfassen:
- Mono(kunststoff)folien (Folien, welche aus einer Schicht eines Materials bestehen; letzteres kann ein reiner Kunststoff oder eine Kunststoffmischung sein);
- Verbundfolien (Folien, welche aus mehreren Schichten oder Beschichtungen aus Polymeren und Barriere-/Sperrschichten, wie z.B. Aluminium (also metallische Schichten oder Metallisierungen/Bedampfungen), und/oder Kaschierkleberschichten und/oder funktionellen Schichten, z.B. Sauerstoffabsorbern, bestehen);
- Papierverbunde (Papier und Polymere und/oder Barriere-/Sperrschichten und/oder Kleberschichten);
- Textilverbunde (Textilien und Polymere und/oder Barriere-/Sperrschichten und/oder Kleberschichten);
- Metallfolien (Trägermaterial ist ein Metall wie z.B. Aluminium; unmittelbares Fügen oder unter Verwendung einer Fügeschicht aus z.B. metallischem Lot oder Polymer).

Die hier vorgeschlagene Fügevorrichtung und das hier vorgeschlagenen Fügeverfahren können auch den Fall umfassen, dass eine Deckelfolie auf einen Becher, eine Schale, etc. aufgesiegelt wird, wobei letztere Behältnisse auch spritzgegossen sein können (Beispiel: Früher waren Druckerpatronen in einem formstabilen Becher verpackt, der mit einer Aluminiumverbundfolie verschlossen war. Ähnliche Anwendungen gibt es in der Medizintechnik, etc.).

Typischerweise umfasst die Fügevorrichtung neben der ersten Werkzeughälfte eine zweite Werkzeughälfte. An einer Oberfläche der zweiten Werkzeughälfte kann wenigstens ein zweiter Dünnschichtsensor angeordnet sein, der wie der erste Dünnschichtsensor zum Erfassen des wenigstens einen Prozessparameterwertes während des Fügeprozesses eingerichtet ist. Die Oberfläche der zweiten Werkzeughälfte kann z. B. wiederum eine Fügeoberfläche oder eine seitliche Oberfläche der zweiten Werkzeughälfte sein.

Der wenigstens eine erste und/oder zweite Dünnschichtsensor kann/können z. B. mithilfe eines bekannten PVD (physical vapor deposition)-Verfahrens oder CVD (chemical vapor deposition)-Verfahrens auf oder an der ersten bzw. zweiten Werkzeugoberfläche aufgebracht bzw. abgeschieden werden. Vorzugsweise hat der wenigstens eine erste und/oder zweite Dünnschichtsensor eine Dicke von höchstens 500 µm, vorzugsweise von höchstens 100 µm, besonders vorzugsweise von höchstens 10 µm. So kann sichergestellt werden, dass der wenigstens eine erste und/oder zweite Dünnschichtsensor die mechanischen Eigenschaften (z. B. Druckverteilung) und/oder thermodynamischen Eigenschaften (z. B. Wärmeübergangskoeffizient, Wärmeleitfähigkeitskoeffizient, Wärmekapazität) der Werkzeughälfte, an der er angeordnet ist, nicht oder so gut wie nicht beeinflusst.

Normalerweise sind die Fügeoberflächen der ersten und der zweiten Werkzeughälfte wenigstens bereichsweise komplementär zueinander geformt, so dass zwischen der Fügeoberfläche der ersten Werkzeughälfte und der Fügeoberfläche der zweiten Werkzeughälfte Materialien einer konstanten Dicke oder einer im Wesentlichen konstanten Dicke zusammengefügt oder verpresst werden können. Die zu fügenden Materialien können z. B. zwei oder mehr Folienlagen umfassen, insbesondere zwei oder mehr Lagen polymerbasierter Folien. Dabei kann es sich z. B. um Folien mit einer Dicke von jeweils höchstens 500 µm handeln, typischerweise mit einer Dicke zwischen 50 µm und 300 µm. Vorzugsweise beträgt die Gesamtdicke der zu fügenden Materialien höchstens 5000 µm, typischerweise zwischen 100 µm und 500 µm. Gewöhnlich sind die Fügeoberflächen der ersten und/oder der zweiten Werkzeughälfte eben oder wenigstens bereichsweise eben ausgebildet. Die Fügeoberflächen können auch wenigstens bereichsweise profiliert sein, wobei eine Profiltiefe vorzugweise weniger als 3 mm beträgt.

Mithilfe des ersten und/oder des zweiten Dünnschichtsensors können noch während des Fügeprozesses und unmittelbar in der Fügezone, d. h. im Bereich der Fügenaht, Unregelmäßigkeiten des wenigstens einen Prozessparameterwertes oder Abweichungen des wenigstens einen Prozessparameterwertes von wenigstens einem Referenzwert erfasst werden. Derartige Unregelmäßigkeiten und/oder Abweichungen können z. B. auf Kontaminationen in der Fügezone (dazwischenliegendes Füllgut), Falten oder Dickenunterschiede zurückgehen. Der wenigstens eine mittels des ersten und/oder mittels des zweiten Dünnschichtsensors erfasste Prozessparameterwert bzw. Messwert kann damit der Abschätzung der Fügenahtqualität dienen. So kann z. B. in Echtzeit eine Prozessanpassung oder eine Aussonderung eines als nicht hinreichend qualitätsgerecht erkannten Produktes vorgenommen werden. Die hier vorgeschlagene Fügevorrichtung kann vorzugsweise alle Anwendungen einschließen, bei denen vorgenannte Materialien zum Verpacken oder als funktionstechnischer Bestandteil qualitativ hochwertig miteinander verbunden werden müssen, d.h. hinreichend fest, dicht und optisch einwandfrei.

Die Fügevorrichtung kann eine mit dem wenigstens einen Dünnschichtsensor verbundene oder verbindbare Auswerteeinheit oder eine Auswerte- und Regeleinheit aufweisen, die eingerichtet ist, eine Abweichung oder den Absolutbetrag der Abweichung des wenigstens einen Prozessparameterwertes oder eines von dem wenigstens einen Prozessparameterwert abgeleiteten Wertes von wenigstens einem Referenzwert zu bestimmen. Der wenigstens eine Prozessparameterwert kann eine Prozessparameterwertkurve umfassen, die einen zeitlichen Verlauf des Prozessparameterwertes wiedergibt. Ebenso kann der wenigstens eine Referenzwert eine Referenzkurve umfassen, die einen zeitlichen Verlauf des Referenzwertes wiedergibt. Der von dem wenigstens einen Prozessparameterwert abgeleitete Wert kann dann z. B. einen Extremwert der Prozessparameterwertkurve, eine Steigung der Prozessparameterwertkurve bzw. eines Teiles derselben oder ein Integral der Prozessparameterwertkurve oder eines Teiles derselben umfassen. Ebenso kann der wenigstens eine Prozessparameterwert Werte verschiedener physikalischer Dimension umfassen, z. B. Druckwerte und Temperaturwerte, insbesondere auch mehrere Parameterwertkurven verschiedener physikalischer Dimension, z. B. wenigstens eine Druckkurve p(t) als Funktion der Zeit und wenigstens eine Temperaturkurve T(t) als Funktion der Zeit.

Die Auswerteeinheit bzw. die Auswerte- und Regeleinheit kann dann z. B. eingerichtet sein, ein Integral über die Abweichung oder über den Absolutbetrag der Abweichung der Prozessparameterwertkurve von der Referenzkurve zu bestimmen. Alternativ oder zusätzlich kann die Auswerteeinheit bzw. die Auswerte- und Regeleinheit eingerichtet sein, eine mittlere Abweichung oder eine Standardabweichung der Prozessparameterwertkurve von der Referenzkurve zu bestimmen. Und alternativ oder zusätzlich kann die Auswerteeinheit bzw. die Auswerte- und Regeleinheit eingerichtet sein, eine Abweichung oder einen Absolutbetrag der Abweichung eines Extremwertes der Prozessparameterwertkurve von einem Extremwert der Referenzkurve zu bestimmen.

Die Auswerteeinheit bzw. die Auswerte- und Regeleinheit kann dann ferner eingerichtet sein,
a. ein Warnsignal auszulösen; und/oder
b. den Fügeprozess zu unterbrechen oder abzubrechen, auf den sich die Abweichung bezieht; und/oder
c. ein Aussondern des Materials einzuleiten, das in dem Fügeprozess gefügt wurde, auf den sich die Abweichung bezieht;
und zwar vorzugsweise, wenn oder sobald die von der Auswerteeinheit bestimmte Abweichung oder der Absolutbetrag der Abweichung größer ist als ein Schwellwert. Dieser Schwellwert kann z. B. durch eine Hüllkurve vorgegeben sein, die den mindestens einen Referenzwert umschließt.

Die Fügevorrichtung kann zudem wenigstens eine von der Auswerte- und Regeleinheit steuerbare Stelleinheit zum Beeinflussen des wenigstens einen Prozessparameters oder zum Beeinflussen wenigstens eines weiteren Prozessparameters umfassen. Die Auswerte- und Regeleinheit und die wenigstens eine Stelleinheit können z. B. eingerichtet sein, den wenigstens einen Prozessparameter oder den wenigstens einen weiteren Prozessparameter abhängig von dem wenigstens einen mittels des ersten und/oder des zweiten Dünnschichtsensors erfassten Prozessparameterwert und/oder abhängig von dem wenigstens einen Referenzwert zu regeln, insbesondere wenn oder sobald die Abweichung oder der Absolutbetrag der Abweichung größer ist als der zuvor genannte Schwellwert. Bei diesem Regelprozess kann der wenigstens eine Referenzwert z. B. als Sollwert dienen. Das Regeln des Prozessparameters und/oder des weiteren Prozessparameters kann z. B. dazu dienen, den Prozessparameter und/oder den weiteren Prozessparameter innerhalb eines vorgegebenen Bereichs zu halten. So kann eine hohe Qualität der Fügenaht sichergestellt und eine Beschädigung des zu fügenden Materials vermieden werden. Auf diese Weise fällt bei der Herstellung weniger Ausschuss an. Der Herstellungsprozess ist damit effizienter und kostengünstiger. Der Hersteller erleidet z. B. auch keine Imageschäden.

Der wenigstens eine Prozessparameter und/oder der weitere Prozessparameter kann einen beim Fügeprozess auf die erste und/oder die zweite Werkzeughälfte ausgeübten Druck umfassen. Die Stelleinheit kann eine Positionierungseinheit zum Einstellen einer Position der ersten Werkzeughälfte und/oder zum Einstellen einer Position der zweiten Werkzeughälfte umfassen, z. B. zum Einstellen eines Abstandes der ersten Werkzeughälfte von der zweiten Werkzeughälfte, insbesondere auch zum Einstellen eines zeitlichen Verlaufs des Abstandes der ersten Werkzeughälfte von der zweiten Werkzeughälfte. Bei einer gegebenen Position der ersten und/oder der zweiten Werkzeughälfte, insbesondere bei einem gegebenen Abstand der ersten von der zweiten Werkzeughälfte kann der auf die erste und/oder die zweite Werkzeughälfte ausgeübte Druck z. B. ein Maß für die Dicke und/oder die Elastizität der zu fügenden Materialien sein. So können z. B. unerwünschte Falten im Bereich der Fügenaht detektiert werden.

Alternativ oder zusätzlich kann der wenigstens eine Prozessparameter und/oder der weitere Prozessparameter eine Temperatur umfassen. Die Stelleinheit kann eine Temperiereinheit zum Beeinflussen einer Temperatur an der Oberfläche der ersten Werkzeughälfte und/oder zum Beeinflussen einer Temperatur an der Oberfläche der zweiten Werkzeughälfte umfassen. Die Temperiereinheit kann z. B. ein Heizelement umfassen, das in oder an der ersten und/oder der zweiten Werkzeughälfte angeordnet und zum Heizen der ersten und/oder der zweiten Werkzeughälfte eingerichtet ist. Ebenso ist es denkbar, dass die Temperiereinheit einen in oder an der ersten und/oder der zweiten Werkzeughälfte angeordneten Kühlmittelkreislauf zum Kühlen der ersten und/oder der zweiten Werkzeughälfte umfasst.

Natürlich können die zuvor beschriebenen Alternativen kombiniert werden. Insbesondere können der Prozessparameter und der Prozessparameterwert einerseits und der weitere Prozessparameter und der weitere Prozessparameterwert andererseits verschiedene physikalische Dimensionen haben.

Z. B. kann die Positioniereinheit auch abhängig von wenigstens einem mittels des ersten und/oder des zweiten Dünnschichtsensors erfassten Temperaturwert regelbar sein. Wird an der Fügeoberfläche der ersten und/oder der zweiten Werkzeughälfte beispielsweise eine zu geringe oder eine zu hohe Temperatur detektiert, so kann der zeitliche Verlauf des Abstandes der beiden Werkzeughälften voneinander z. B. abhängig von der detektierten Temperatur und ggf. abhängig von einem Temperaturreferenzwert regelbar sein. Z. B. kann die Fügezeit bei einer zu geringen Temperatur im Bereich der Fügenaht gegenüber einer vorgegebenen Referenzfügezeit verlängert werden, um trotz der zu geringen Temperatur einen hinreichend hohen Wärmestrom und damit ein hinreichend gutes Auf- und Verschmelzen der zu fügenden Materialien und eine hinreichende Festigkeit der Fügenaht zu erzielen. Ebenso ist es denkbar, dass die Fügezeit bei einer zu hohen Temperatur im Bereich der Fügenaht gegenüber der Referenzfügezeit verkürzt werden kann, um eine Beschädigung der zu fügenden Materialen infolge der zu hohen Temperatur zu vermeiden. Die Fügezeit bezeichnet dabei z. B. diejenige Zeitdauer, während derer beide Werkzeughälften in Kontakt mit dem zu fügenden Material zwischen den Werkzeughälften sind. Dies kann z. B. dadurch indiziert sein, dass ein auf die erste und/oder die zweite Werkzeughälfte ausgeübter Druck einen Schwellwert übersteigt. Alternativ oder zusätzlich kann die Fügezeit diejenige Zeitdauer bezeichnen, während derer ein Abstand der ersten Werkzeughälfte von der zweiten Werkzeughälfte kleiner ist als ein Schwellwert.

Alternativ oder zusätzlich kann der Druck abhängig von wenigstens einem mittels des ersten und/oder des zweiten Dünnschichtsensors erfassten Temperaturwert regelbar sein. Wird an der Fügeoberfläche der ersten und/oder der zweiten Werkzeughälfte beispielsweise eine zu geringe oder eine zu hohe Temperatur detektiert, so kann der Druck, der auf das zu fügende Material und auf die erste und/oder auf die zweite Werkzeughälfte ausgeübt wird, abhängig von der detektierten Temperatur und ggf. abhängig von einem Temperaturreferenzwert regelbar sein. Z. B. kann der Druck auf die Werkzeughälften reduziert werden, wenn die Temperatur höher ist als ein Referenzwert. So kann vermieden werden, dass zu viel schmelzflüssiges Material aus der Naht herausgedrückt wird und nicht mehr für ein dichtes Verschließen der Naht zur Verfügung steht. Wenn die Temperatur dagegen zu niedrig ist, kann der Druck auf die Werkzeughälften erhöht werden, um Schmelze besser in Bereiche potenzieller Undichtigkeiten zu verdrängen.

Der wenigstens eine erste und/oder zweite Dünnschichtsensor kann also wenigstens einen Drucksensor aufweisen. Z. B. kann der wenigstens eine erste und/oder zweite Dünnschichtsensor wenigstens ein piezoelektrisches Element aufweisen, an dem ein druckabhängiges elektrisches Signal erfassbar ist, insbesondere eine elektrische Spannung oder eine elektrische Stromstärke, und/oder das einen druckabhängigen elektrischen Widerstand hat. Der wenigstens eine Prozessparameter und/oder der weitere Prozessparameter kann einen auf die erste und/oder die zweite Werkzeughälfte ausgeübten Druck umfassen.

Alternativ oder zusätzlich kann der wenigstens eine erste und/oder zweite Dünnschichtsensor wenigstens einen Abstandssensor aufweisen. Z. B. kann der wenigstens eine erste und/oder zweite Dünnschichtsensor ein kapazitives oder induktives Element aufweisen, an dem ein elektrisches Signal abgreifbar oder detektierbar ist, insbesondere eine elektrische Spannung oder eine elektrische Stromstärke, das oder die von einem Abstand der ersten Werkzeughälfte von der zweiten Werkzeughälfte und/oder von einer Magnetisierung der ersten und/oder der zweiten Werkzeughälfte abhängig ist. Der wenigstens eine Prozessparameter und/oder der weitere Prozessparameter kann einen Abstand zwischen der ersten und der zweiten Werkzeughälfte umfassen.

Alternativ oder zusätzlich kann der wenigstens eine erste und/oder zweite Dünnschichtsensor wenigstens einen Temperatursensor aufweisen. Z. B. kann der wenigstens eine erste und/oder zweite Dünnschichtsensor wenigstens ein Thermoelement und/oder wenigstens einen widerstandsbasierten Sensor zur Temperaturmessung aufweisen. Der wenigstens eine Prozessparameter und/oder der weitere Prozessparameter kann eine Temperatur umfassen.

Alternativ oder zusätzlich kann der wenigstens eine erste und/oder zweite Dünnschichtsensor wenigstens einen Feuchtigkeitssensor aufweisen. Z. B. kann der wenigstens eine erste und/oder zweite Dünnschichtsensor wenigstens einen Kondensator mit feuchtigkeitsabhängiger Kapazität aufweisen, der eine zwischen den Kondensatorplatten angeordnete hygroskopische Schicht umfasst. Ebenso kann der wenigstens eine erste und/oder zweite Dünnschichtsensor wenigstens zwei Gleichstromelektroden aufweisen, zwischen denen eine hygroskopische Schicht mit feuchtigkeitsabhängigem elektrischen Widerstand angeordnet ist. Der wenigstens eine Prozessparameter und/oder der weitere Prozessparameter kann eine Feuchtigkeit umfassen.

Alternativ oder zusätzlich kann der wenigstens eine erste und/oder zweite Dünnschichtsensor wenigstens einen Dehnungssensor aufweisen. Z. B. kann der wenigstens eine erste und/oder zweite Dünnschichtsensor wenigstens einen elektrischen Leiter mit einem von einer mechanischen Verformung des elektrischen Leiters abhängigen elektrischen Widerstand aufweisen. Der wenigstens eine Prozessparameter und/oder der weitere Prozessparameter kann eine Verformung oder Dehnung umfassen.

Der erste Dünnschichtsensor an der Oberfläche der ersten Werkzeughälfte und der zweite Dünnschichtsensor an der Oberfläche der zweiten Werkzeughälfte können jeweils wenigstens eine Elektrode aufweisen. Der wenigstens eine Prozessparameter kann dann einen Abstand zwischen der ersten und der zweiten Werkzeughälfte und/oder eine elektrische und/oder magnetische Eigenschaft der während des Fügeprozesses zwischen der ersten und der zweiten Werkzeughälfte angeordneten Materialien umfassen, insbesondere eine Dielektrizität und/oder eine Magnetisierbarkeit und/oder eine elektrische Induktivität und/oder einen elektrischen Widerstand der zwischen den Werkzeughälften angeordneten Materialien. Der Prozessparameterwert kann dann einen Wert einer mittels der Elektroden an der ersten und der zweiten Werkzeughälfte erfassbaren elektrischen Kapazität und/oder Induktivität oder eines mittels der Elektroden an der ersten und der zweiten Werkzeughälfte erfassbaren elektrischen Widerstandes der zwischen den Werkzeughälften angeordneten und zu fügenden oder gefügten Materialien umfassen. Der wenigstens eine Prozessparameter und der wenigstens eine Prozessparameterwert können alternativ oder zusätzlich auch eine elektrische Spannung sowie einen zwischen den Elektroden an der ersten und der zweiten Werkzeughälfte erfassten Spannungswert oder eine elektrische Stromstärke sowie einen zwischen den Elektroden an der ersten und der zweiten Werkzeughälfte erfassten Stromstärkewert umfassen.

Der wenigstens eine erste Dünnschichtsensor und/oder der wenigstens eine zweite Dünnschichtsensor können jeweils eine Vielzahl von Dünnschichtsensoren aufweisen, die zum räumlich aufgelösten Erfassen des wenigstens einen Prozessparameterwertes räumlich verteilt an der Oberfläche, insbesondere der Fügeoberfläche der ersten und/oder der zweiten Werkzeughälfte angeordnet sind und einzeln auslesbar sind. Die Dünnschichtsensoren eines solchen Dünnschichtsensorarrays können zum Erfassen des wenigstens einen Prozessparameterwertes z. B. zeitgleich oder sequentiell auslesbar sein oder ausgelesen werden. Ebenso kann die Vielzahl von Dünnschichtsensoren dieses Dünnschichtsensorarrays derart verschaltbar sein oder verschaltet sein, dass mittels dieser Vielzahl von Dünnschichtsensoren oder mittels einer Teilmenge der Vielzahl von Dünnschichtsensoren ein partiell räumlich gemittelter Wert des wenigstens einen Prozessparameterwertes oder ein über die Vielzahl der Dünnschichtsensoren oder ein über die Teilmenge der Vielzahl von Dünnschichtsensoren aufaddierter Wert des wenigstens einen Prozessparameterwertes erfassbar ist oder erfasst wird.

Zwischen der ersten Werkzeughälfte und dem wenigstens einen ersten Dünnschichtsensor und/oder zwischen der zweiten Werkzeughälfte und dem wenigstens einen zweiten Dünnschichtsensor kann jeweils eine elektrisch nicht leitende Isolationsschicht angeordnet bzw. aufgebracht sein, die der elektrischen Isolierung des ersten bzw. des zweiten Dünnschichtsensors von der ersten bzw. der zweiten Werkzeughälfte dient.

Alternativ oder zusätzlich kann zum Schutz des wenigstens einen ersten und/oder zweiten Dünnschichtsensors an einer von der ersten bzw. zweiten Werkzeughälfte abgewandten Seite des wenigstens einen ersten bzw. zweiten Dünnschichtsensors eine erste bzw. zweite Schutzschicht angeordnet oder aufgebracht sein.

Alternativ oder zusätzlich kann an einer von der ersten und/oder zweiten Werkzeughälfte abgewandten Seite des wenigstens einen ersten bzw. zweiten Dünnschichtsensors eine erste bzw. zweite Antihaftschicht angeordnet oder aufgebracht sein. Diese Antihaftschicht ist dazu ausgebildet, während des Fügeprozesses das Anhaften der erwärmten oder geschmolzenen oder teilweise erwärmten oder geschmolzenen, gefügten oder zu fügenden Materialien an dem ersten bzw. dem zweiten Dünnschichtsensor zu verhindern.

Ausführungsbeispiele der Erfindung sind in den Figuren dargestellt und werden anhand der nachfolgenden Beschreibung näher erläutert. Es zeigen:
- Fig. 1: schematisch in einer Seitendarstellung einen Lagensprung im Kreuzungsbereich von Längs- und Quernaht eines Beutels aus Kunststoffverbundfolie;
- Fig. 2: schematisch in perspektivischer Darstellung eine aus dem Stand der Technik bekannte Anordnung eines Temperaturmessfühlers im Inneren eines Fügewerkzeuges weit hinter der relevanten Werkzeugoberfläche;
- Fig. 3: in perspektivischer Darstellung eine Ausführungsform einer erfindungsgemäßen Fügevorrichtung mit zwei Werkzeugteilen und mit an den Fügeoberflächen der Werkzeugteile angeordne-ten Dünnschichtsensoren;
- Fig. 4a: in perspektivischer Darstellung eine Werkzeughälfte einer erfindungsgemäßen Fügevorrichtung gemäß einer weiteren Ausführungsform mit an einer Fügeoberfläche der Werkzeughälfte angeordneten Dünnschichtsensoren;
- Fig. 4b: die Werkzeughälfte gemäß Fig. 4a mit Werkzeughälftenaufnahme und mit Kontaktklemmen zum Kontaktieren der Dünnschichtsensoren;
- Fig. 5: eine erste und eine zweite Temperaturmesskurve, wobei die erste Temperaturmesskurve mittels eines bekannten Feindrahtthermoelementes aufgenommen wurde und wobei die zweite Temperaturmesskurve mittels eines erfindungsgemäßen Dünnschichtthermoelements aufgenommen wurde;
- Fig. 6a: in perspektivischer Darstellung eine Werkzeughälfte einer erfindungsgemäßen Fügevorrichtung gemäß einer weiteren Ausführungsform mit einer Vielzahl von Dünnschichtsensoren, die an einer Fügeoberfläche der Werkzeughälfte angeordnet sind;
- Fig. 6b: einen Ausschnitt der Werkzeughälfte gemäß Fig. 6a in vergrößerter Darstellung;
- Fig. 7a: in einer Seitendarstellung eine Werkzeughälfte einer erfindungsgemäßen Fügevorrichtung gemäß einer weiteren Ausführungsform mit einem unmittelbar an einer Oberfläche der Werkzeughälfte angeordneten Dünnschichtsensor;
- Fig. 7b: in einer Seitendarstellung eine Werkzeughälfte einer erfindungsgemäßen Fügevorrichtung gemäß einer weiteren Ausführungsform mit einem an einer Oberfläche der Werkzeughälfte angeordneten Dünnschichtsensor und mit ober- und unterhalb des Dünnschichtsensors angeordneten Funktionsschichten;
- Fig. 8a: in perspektivischer Darstellung eine erfindungsgemäße Fügevorrichtung gemäß einer weiteren Ausführungsform mit zwei Werkzeughälften, einer Vielzahl von Dünnschichtsensoren, die entlang der Fügeoberflächen der Werkzeughälften angeordnet sind, mit einer Auswerte- und Regeleinheit, die mit den Dünnschichtsensoren verbunden ist, und mit einer Stelleinheit; und
- Fig. 8b-d: Messkurven, die mit einer Fügevorrichtung entsprechend der Fügevorrichtung aus Fig. 8a aufgenommen wurden.

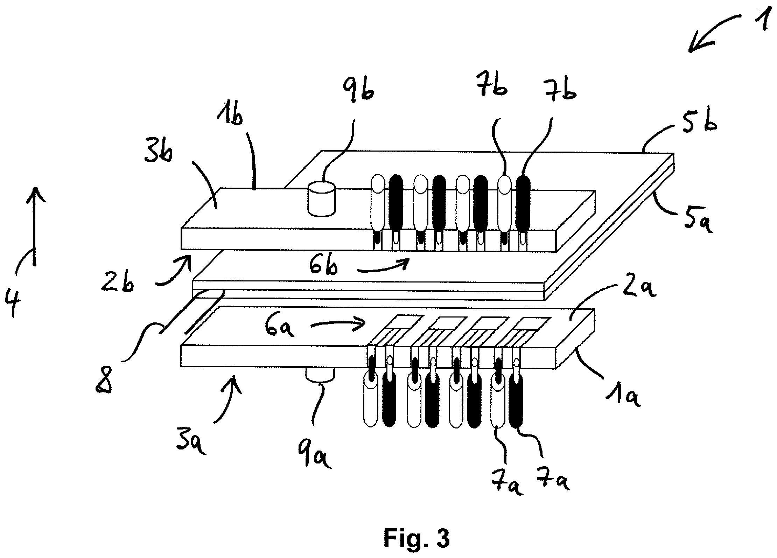

Fig. 3 zeigt eine erfindungsgemäße Fügevorrichtung 1 zum Fügen flexibler Materialien, z. B. zum Fügen von Monokunststofffolien oder zum Fügen von Verbundfolien, die mehrere Polymerschichten und zwischen den Polymerschichten angeordnete metallische oder nichtmetallische Barriere- oder Sperrschichten aufweisen können. Die Fügevorrichtung 1 umfasst eine erste Werkzeughälfte 1a und eine zweite Werkzeughälfte 1b. Die Werkzeughälften 1a, 1b bestehen z. B. aus Metall. Die Werkzeughälften 1a, 1b weisen jeweils eine Oberfläche 2a, 2b und eine Rückseite 3a, 3b auf. Die Oberflächen 2a, 2b der Werkzeughälften 1a, 1b sind einander zugewandt und zum Fügen von flexiblen Materialien, insbesondere zum Fügen von Folien zwischen den Oberflächen 2a, 2b ausgebildet. In dieser Darstellung sind die Oberflächen 2a, 2b jeweils vollständig eben ausgebildet. Entlang einer Verfahrrichtung 4, die senkrecht zu den ebenen Oberflächen 2a, 2b ausgerichtet ist, sind die Werkzeughälften 1a, 1b mittels einer hier nicht dargestellten Positioniereinheit relativ zueinander verfahrbar.

So können z. B. zwei Kunststofffolien 5a, 5b zusammengefügt werden, indem die Werkzeughälften 1a, 1b entlang der Richtung 4 aufeinander zu bewegt werden und die Folien 5a, 5b zwischen den Werkzeughälften 1a, 1b gegeneinander gepresst werden. Bei den Folien 5a, 5b kann es sich z. B. jeweils um eine Monofolie oder eine Verbundfolie oder eine Mono- und eine Verbundfolie mit einer Dicke von weniger als 500 µm handeln. Beim Verpressen der Folien 5a, 5b zwischen den Werkzeughälften 1a, 1b kann zusätzlich Wärme von den metallischen Werkzeughälften 1a, 1b auf die zu fügenden Folien 5a, 5b übertragen werden, um die Folien 5a, 5b wenigstens teilweise aufzuschmelzen und so eine stoffschlüssige Verbindung zwischen den Folien 5a, 5b herzustellen. Zu diesem Zweck können die Werkzeughälften 1a, 1b jeweils ein hier nicht dargestelltes Heizelement aufweisen. Diese Heizelemente können z. B. jeweils eine oder mehrere Heizkartuschen, Rohrheizelemente oder keramische Heizelemente umfassen, die in oder an den Werkzeughälften 1a, 1b angeordnet sind. In demjenigen Bereich der Folien 5a, 5b, in dem diese durch Krafteinwirkung und ggf. durch zusätzliche Wärmeeinwirkung zwischen den Werkzeughälften 1a, 1b zusammengefügt werden, wird so eine Fügenaht hergestellt, entlang derer die Folien 5a, 5b nach dem Fügeprozess miteinander verbunden sind.

Die Güte der Fügenaht, insbesondere deren Festigkeit, Dichtheit und optische Erscheinung ist dabei maßgeblich durch eine Anzahl von Prozessparametern beeinflussbar. Diese Prozessparameter umfassen insbesondere einen während des Fügeprozesses im Bereich der Fügenaht entlang der Richtung 4 mittels der Werkzeughälften 1a, 1b auf die Folien 5a, 5b ausgeübten Druck oder einen zeitlichen Verlauf und/oder eine räumliche Verteilung des auf die Folien 5a, 5b ausgeübten Druckes, insbesondere eine Zeitdauer, während derer die Folien 5a, 5b gegeneinander gepresst werden (Fügezeit); einen Abstand der Oberflächen 2a, 2b voneinander oder einen zeitlichen Verlauf dieses Abstandes während des Fügeprozesses; eine während des Fügeprozesses im Bereich der Fügenaht herrschende Temperatur oder einen zeitlichen Verlauf dieser Temperatur und/oder eine räumliche Verteilung dieser Temperatur; und ggf. einen während des Fügeprozesses im Bereich der Fügenaht herrschenden Feuchtegrad oder einen zeitlichen Verlauf dieses Feuchtegrades und/oder eine räumliche Verteilung dieses Feuchtegrades.

Zum Herstellen einer qualitativ hochwertigen Fügenaht ist eine möglichst genaue Überwachung und Regelung dieser Prozessparameter während des Fügeprozesses daher von großer Bedeutung. Zum Erfassen und ggf. zum Regeln wenigstens eines der o. g. Prozessparameter und/oder zum Erfassen und ggf. zum Regeln des zeitlichen Verlaufs wenigstens eines der o. g. Prozessparameter weisen die Werkzeughälften 1a, 1b jeweils Dünnschichtsensoren 6a, 6b auf. Die Dünnschichtsensoren 6a, 6b sind jeweils an einer Oberfläche der Werkzeughälften 1a, 1b angeordnet, hier insbesondere jeweils an den Oberflächen 2a, 2b. Damit können Prozessparameterwerte und/oder ein zeitlicher Verlauf der Prozessparameterwerte eines oder mehrerer der o. g. Prozessparameter in unmittelbarer Nähe der Fügezone in der Fügenaht erfasst werden. Dies erlaubt eine besonders genaue Messung und/oder Regelung der Prozessparameter. Gegenüber anderen Sensoren weisen die Dünnschichtsensoren 6a, 6b insbesondere auch wegen ihrer geringen Massen eine geringe Trägheit auf, d. h. sie können auch schnelle zeitliche Änderungen der Prozessparameterwerte während des Fügeprozesses erfassen. Zum räumlich aufgelösten Erfassen der Prozessparameter ist an den Oberflächen 2a, 2b zudem jeweils eine Vielzahl von Dünnschichtsensoren 6a, 6b angeordnet. Die Dünnschichtsensoren können z. B. in gleichmäßigen Abständen entlang der Oberfläche der jeweiligen Werkzeughälfte 1a, 1b verteilt und angeordnet sein.

Die Dünnschichtsensoren 6a, 6b können z. B. mittels eines PVD- und/oder mittels eines CVD-Verfahrens auf die Oberflächen der Werkzeughälften 1a, 1b aufgebracht oder an den Oberflächen der Werkzeughälften 1a, 1b abgeschieden werden. Typischerweise haben die Dünnschichtsensoren 6a, 6b senkrecht zur Werkzeugoberfläche, auf der sie angeordnet sind, in Fig. 3 also insbesondere entlang der Richtung 4 jeweils eine Dicke von höchstens 500 µm, vorzugsweise von höchstens 100 µm, besonders vorzugsweise von höchstens 10 µm. Über elektrische Kontaktierungen 7a, 7b können die Dünnschichtsensoren 6a, 6b jeweils mit einer hier nicht dargestellen Auswerte- und Regeleinheit verbunden sein. Die Kontaktierungen 7a, 7b können entlang der Oberflächen der Werkzeughälften 1a, 1b und/oder ggf. wenigstens teilweise im Inneren der Werkzeughälften 1a, 1b verlaufen.

Die Dünnschichtsensoren 6a, 6b oder wenigstens einige der Dünnschichtsensoren 6a, 6b können als Drucksensor ausgebildet sein. Dazu können die als Drucksensor ausgebildeten Dünnschichtsensoren 6a, 6b jeweils wenigstens ein piezoelektrisches Element aufweisen oder ein Element, das z. B. einen druckabhängigen elektrischen Widerstand hat. An diesen Drucksensoren kann dann jeweils ein druckabhängiges elektrisches Signal erfasst werden, insbesondere eine elektrische Spannung oder eine elektrische Stromstärke. Auf diese Weise können z. B. lokale Schwankungen der Dicke oder der Elastizität des Materials der Folien 5a, 5b detektiert werden.

Alternativ oder zusätzlich können die Dünnschichtsensoren 6a, 6b oder wenigstens einige der Dünnschichtsensoren 6a, 6b als Dehnungssensor zum Erfassen einer mechanischen Verformung ausgebildet sein. Dazu können die als Dehnungssensor ausgebildeten Dünnschichtsensoren 6a, 6b jeweils wenigstens einen elektrischen Leiter mit einem von einer mechanischen Verformung dieses elektrischen Leiters abhängigen elektrischen Widerstand aufweisen. An diesen Dehnungssensoren kann dann jeweils ein elektrisches Signal erfasst werden, insbesondere eine elektrische Spannung oder eine elektrische Stromstärke, das z. B. von der lokalen Verformung der Folien 5a, 5b oder der Oberflächen 2a, 2b abhängig ist. Auf diese Weise können z. B. lokale Schwankungen der Dicke oder der Elastizität des Materials der Folien 5a, 5b detektiert werden.

Alternativ oder zusätzlich können die Dünnschichtsensoren 6a, 6b oder wenigstens einige der Dünnschichtsensoren 6a, 6b als Abstandssensoren ausgebildet sein, die eingerichtet sind, den Abstand der Oberflächen 2a, 2b voneinander zu erfassen. Dazu können die als Abstandssensor ausgebildeten Dünnschichtsensoren 6a, 6b jeweils wenigstens ein induktives Element aufweisen, an dem ein elektrisches Signal erfasst werden kann, z. B. eine elektrische Spannung oder eine elektrische Stromstärke, das von vom Abstand der Werkzeughälften 1a, 1b und ggf. von der Magnetisierung der jeweils anderen Werkzeughälfte 1a, 1b abhängig ist.

Zum Messen des Abstandes der Oberflächen 2a, 2b voneinander kann alternativ oder zusätzlich jeweils wenigstens eine Elektrode wenigstens eines Dünnschichtsensors 6a an der Oberfläche 2a mit jeweils wenigstens einer Elektrode wenigstens eines Dünnschichtsensors 6b an der gegenüberliegenden Oberfläche 2b einen Kondensator mit abstandsabhängiger elektrischer Kapazität bilden, die über ein abstandsabhängiges elektrisches Signal an den Elektroden der einander gegenüberliegenden Dünnschichtsensoren 6a, 6b erfasst werden kann. Die Kapazität eines solchen Kondensators ist zudem abhängig von der Dielektrizitätskonstante oder der lokalen Dielektrizitätskonstante und/oder von der Dicke oder der lokalen Dicke der Folien 5a, 5b im Bereich der jeweiligen Elektroden. So können z. B. räumliche Inhomogenitäten des Materials der Folien 5a, 5b oder lokale Schwankungen der Dicke der Folien 5a, 5b detektiert werden.

Einander gegenüberliegende Elektroden wenigstens eines Dünnschichtsensors 6a an der Oberfläche 2a und wenigstens eines Dünnschichtsensors 6b an der gegenüberliegenden Oberfläche 2b können alternativ oder zusätzlich auch dem räumlich und/oder zeitlich aufgelösten Erfassen eines elektrischen Widerstandes der während des Fügeprozesses zwischen den Oberflächen 2a, 2b angeordneten Folien 5a, 5b dienen. So können z. B. räumliche Inhomogenitäten des Materials der Folien 5a, 5b oder lokale Schwankungen der Dicke der Folien 5a, 5b detektiert werden.

Alternativ oder zusätzlich können die Dünnschichtsensoren 6a, 6b oder wenigstens einige der Dünnschichtsensoren 6a, 6b als Temperatursensoren ausgebildet sein, die eingerichtet sind, die Temperatur an den Oberflächen 2a, 2b und an den Folien 5a, 5b im Bereich der Fügenaht zu erfassen. Dazu können die als Temperatursensoren ausgebildeten Dünnschichtsensoren 6a, 6b z. B. ein Widerstandsthermometer oder ein Thermoelement aufweisen. Auf diese Weise kann z. B. ein räumlich und/oder zeitlich aufgelöster Temperaturverlauf an den Oberflächen 2a, 2b und an den Folien 5a, 5b im Bereich der Fügenaht erfasst werden.

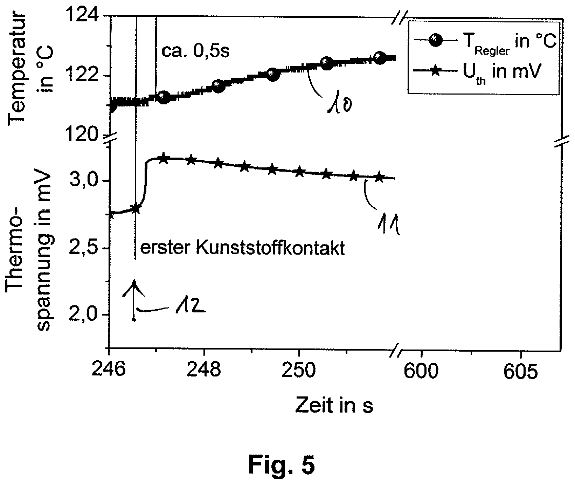

Nur zum Vergleich zeigt Fig. 3 ferner aus dem Stand der Technik bekannte Temperatursensoren. Dazu zählt z. B. ein Feindrahtthermoelement 8, das während des Fügeprozesses zwischen die Folien 5a, 5b geschoben werden kann, oder Mantelthermometer 9a, 9b, häufig platinbasierte PT100 oder PT1000, an den Rückseiten 3a, 3b der Werkzeughälften 1a, 1b. Zur Verdeutlichung der Vorteilhaftigkeit der Dünnschichttemperatursensoren 6a, 6b an den Oberflächen 2a, 2b der erfindungsgemäßen Fügevorrichtung 1 aus Fig. 3 gegenüber dem aus dem Stand der Technik bekannten Feindrahtthermoelement 8 zeigt Fig. 5 zwei Temperaturkurven 10, 11. Die Temperaturkurve 10 wurde mit dem Feindrahtthermoelement 8 aufgenommen, und die Temperaturkurve 11 wurde mit einem der Dünnschichttemperatursensoren 6a, 6b der erfindungsgemäßen Fügevorrichtung 1 aus Fig. 3 aufgenommen. In Fig. 5 ist deutlich zu erkennen, dass die mittels des Feindrahtthermoelements 8 aufgenommene Temperaturkurve 10 einer Temperaturänderung im Bereich der Fügenaht zu einem Zeitpunkt 12 wesentlich langsamer folgt als die mittels der Dünnschichttemperatursensoren 6a, 6b aufgenommene Temperaturkurve 11. Die Temperaturänderung zum Zeitpunkt 12 kann z. B. auftreten, wenn die beiden Folien 5a, 5b (siehe Fig. 3) während des Fügeprozesses durch die Werkzeughälften 1a, 1b erstmalig in Kontakt gebracht und gegeneinander gepresst werden, wodurch schlagartig ein Wärmeübergang von den Werkzeughälften 1a, 1b auf die Folien 5a, 5b im Bereich der Fügenaht einsetzt und sich zum Zeitpunkt 12 die Temperatur sprunghaft ändert.

Alternativ oder zusätzlich können die Dünnschichtsensoren 6a, 6b oder wenigstens einige der Dünnschichtsensoren 6a, 6b als Feuchtigkeitssensoren ausgebildet sein, die eingerichtet sind, einen Feuchtigkeitsgrad an den Oberflächen 2a, 2b und im Bereich der Fügenaht zu erfassen. Dazu können die als Feuchtigkeitssensor ausgebildeten Dünnschichtsensoren 6a, 6b jeweils wenigstens einen Kondensator mit feuchtigkeitsabhängiger Kapazität umfassen, der eine zwischen den Kondensatorplatten angeordnete hygroskopische Schicht umfasst. Ebenso können die als Feuchtigkeitssensor ausgebildeten Dünnschichtsensoren 6a, 6b jeweils wenigstens zwei Gleichstromelektroden aufweisen, zwischen denen eine hygroskopische Schicht mit einem feuchtigkeitsabhängigen elektrischen Widerstand angeordnet ist. An den Kondensatorplatten bzw. an den Gleichstromelektroden kann dann ein feuchtigkeitsabhängiges elektrisches Signal erfasst werden, z. B. eine elektrische Spannung oder eine elektrische Stromstärke. Auf diese Weise kann z. B. ein räumlich und/oder zeitlich aufgelöster Feuchtigkeitsgrad an den Oberflächen 2a, 2b und im Bereich der Fügenaht erfasst werden.

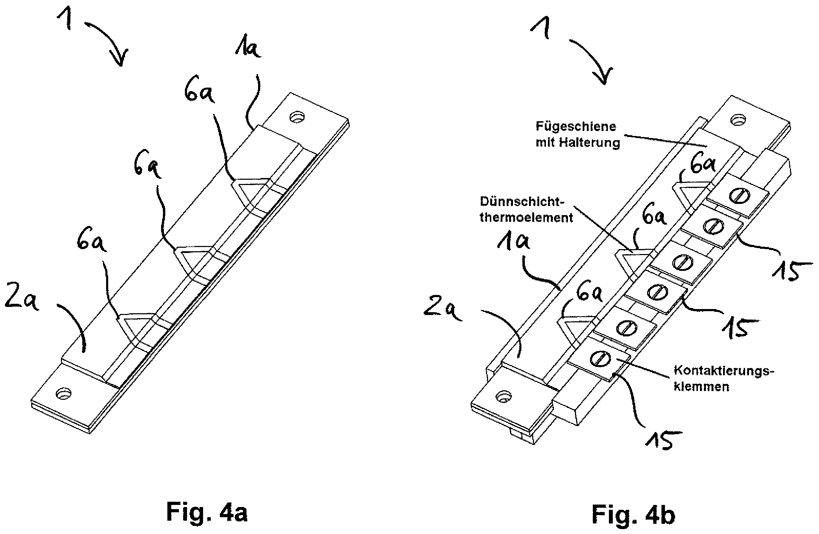

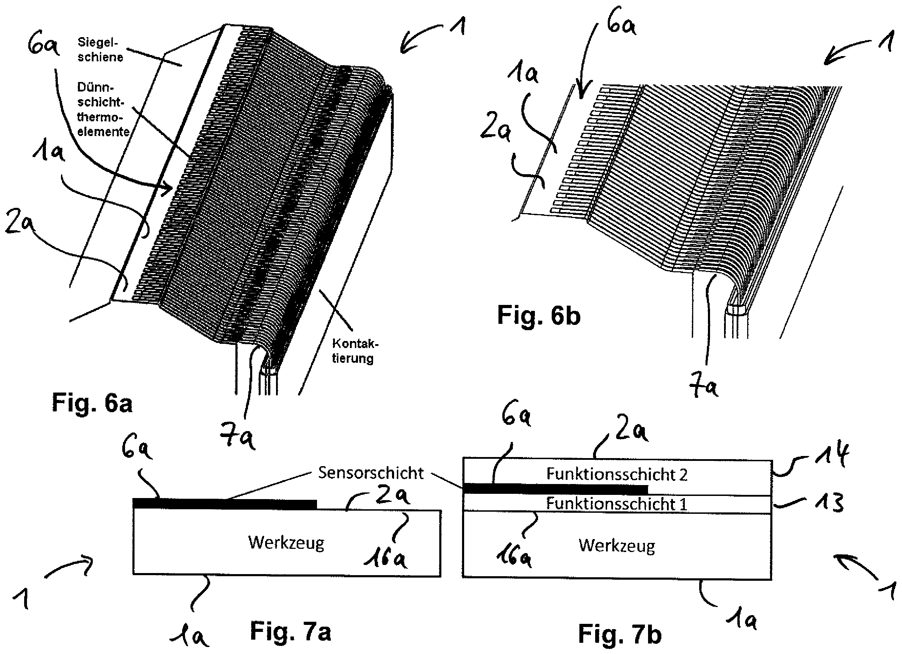

Fign. 4a-b und 6a-b zeigen weitere Ausführungsformen der ersten Werkzeughälfte 1a der erfindungsgemäßen Fügevorrichtung 1 aus Fig. 3. Hier und im Folgenden sind wiederkehrende Merkmale dabei mit denselben Bezugszeichen bezeichnet. Erkennbar sind wiederum die ebene Oberfläche 2a der Werkzeughälfte 1a sowie eine Anzahl von Dünnschichtsensoren 6a, z. B. Druck-, Feuchtigkeits- oder Temperatursensoren, die in geeigneten Abständen entlang der Oberfläche 2a angeordnet sind und über die Kontaktierungen 7a z. B. mit der zuvor erwähnten Auswerte- und Regeleinheit verbunden sind oder verbindbar sind. Die Werkzeughälfte 1a gemäß Fig. 4b weist zusätzlich Kontaktierungsklemmen 15 auf, die jeweils den elektrischen Kontakt der Anschlussleitungen mit den Dünnschichtsensoren 6a sicherstellen. Nur der Übersichtlichkeit halber sind in Fig. 4b nur einige der Kontaktierungsklemmen 15 explizit mit Bezugszeichen bezeichnet.

Fig. 7a zeigt eine weitere Ausführungsform der Werkzeughälfte 1a des erfindungsgemäßen Fügewerkzeugs 1, wobei die Dünnschichtsensoren 6a oder wenigstens einer oder einige der Dünnschichtsensoren 6a unmittelbar an oder auf einer der zweiten Werkzeughälfte 1b (siehe Fig. 3) zugewandten Oberseite 16a der Werkzeughälfte 1a angeordnet sind bzw. angeordnet ist, wobei die Oberseite 16a in Fig. 7a die Fügeoberfläche 2a bildet.

Die Ausführungsform der Werkzeughälfte 1a des erfindungsgemäßen Fügewerkzeugs 1 gemäß Fig. 7b unterscheidet sich von der Ausführungsform gemäß Fig. 7a dadurch, dass zwischen der Oberseite 16a der Werkzeughälfte 1a und dem Dünnschichtsensor 6a eine erste Funktionsschicht in Form einer Isolationsschicht 13 angeordnet ist, die den Dünnschichtsensor 6a elektrisch von der Werkzeughälfte 1a isoliert. An der von der ersten Werkzeughälfte 1a abgewandten und der zweiten Werkzeughälfte 1b (siehe Fig. 3) zugewandten Seite des Dünnschichtsensors 6a ist über dem Dünnschichtsensor 6a eine zweite Funktionsschicht in Form einer Schutzschicht 14 aufgebracht oder angeordnet, die dem Schutz des Dünnschichtsensors 6a dient, insbesondere während des Fügeprozesses. Eine von der Werkzeughälfte 1a abgewandte Oberseite der Schutzschicht 14 bildet die Fügeoberfläche 2a. Alternativ oder zusätzlich zur Schutzschicht 14 kann an der von der Werkzeughälfte 1a abgewandten Seite des Dünnschichtsensors 6a auch eine Antihaftschicht aufgebracht oder angeordnet sein, die dazu dient, das Anhaften von zu fügendem Material an dem Dünnschichtsensor 6a zu verhindern. An einer Oberseite der zweiten Werkzeughälfte 1b (siehe Fig. 3) können ebenso eine entsprechende Isolations-, Schutz- und/oder Antihaftschicht aufgebracht oder angeordnet sein.

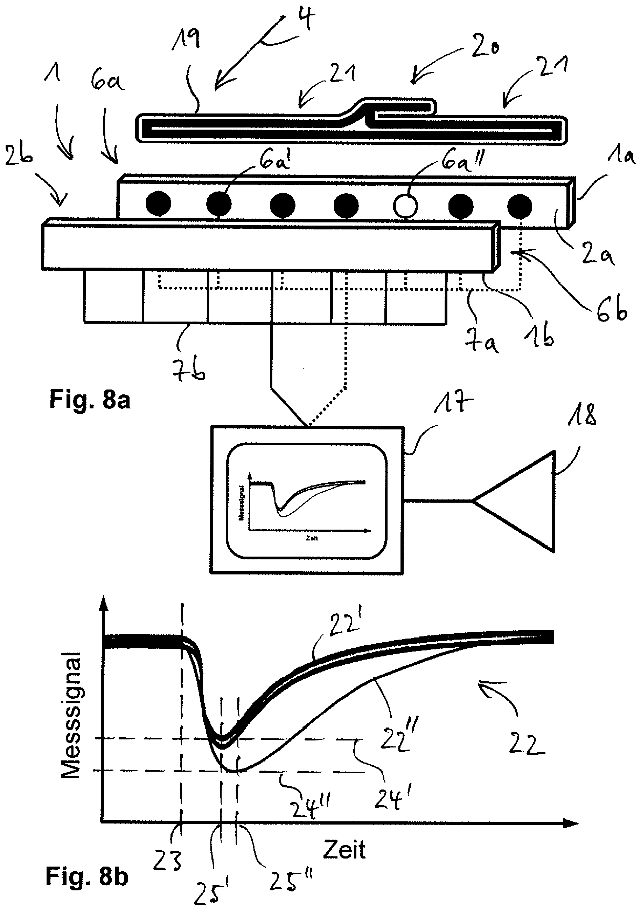

Fig. 8a zeigt wiederum eine Ausführungsform einer erfindungsgemäßen Fügevorrichtung 1 mit einer ersten Werkzeughälfte 1a und einer zweiten Werkzeughälfte 1b, die jeweils als Siegelschienen ausgebildet sind. An den einander zugewandten Oberflächen 2a, 2b der Werkzeughälften 1a, 1b sind jeweils eine Vielzahl von Dünnschichtsensoren 6a, 6b in geeigneten Abständen angeordnet und über Kontaktierungen 7a, 7b mit einer Auswerte- und Regeleinheit 17 verbunden. Zwei der Dünnschichtsensoren 6a, nämlich die Dünnschichtsensoren 6a' und 6a", sind hier gesondert hervorgehoben. Die Auswerte- und Regeleinheit 17 wiederum ist mit einer hier nur schematisch dargestellten Stelleinheit 18 verbunden.

Die Stelleinheit 18 kann z. B. wenigstens ein Heizelement umfassen, das in oder an der ersten Werkzeughälfte 1a und/oder das in oder an der zweiten Werkzeughälfte 1b angeordnet ist. Über diese Heizelemente kann Wärme an die Werkzeughälften 1a, 1b abgegeben werden, so dass mittels der Heizelemente die Temperatur der Werkzeughälften 1a, 1b, insbesondere die Temperatur der zum Fügen verwendeten Oberflächen 2a, 2b beeinflussbar oder einstellbar ist. Über die Temperatur der Oberflächen 2a, 2b ist wiederum die Temperatur im Bereich der Fügenaht beeinflussbar oder einstellbar. Die Heizelemente der Stelleinheit 18 sind über die Auswerte- und Regeleinheit 17 steuer- und regelbar.

Alternativ oder zusätzlich kann die Stelleinheit 18 eine Positionierungseinheit umfassen, die eingerichtet ist, einen Abstand zwischen den Werkzeughälften 1a, 1b entlang der Richtung 4 einzustellen. Über den Abstand zwischen den Werkzeughälften 1a, 1b ist mittels der Positionierungseinheit auch ein Druck einstellbar, der während des Fügeprozesses auf ein zwischen den Werkzeughälften 1a, 1b angeordnetes und zu fügendes Material ausgeübt wird. Die Positionierungseinheit kann z. B. einen oder mehrere Elektromotoren und/oder eine Hydraulik umfassen. Die Positionierungseinheit der Stelleinheit 18 ist über die Auswerte- und Regeleinheit 17 steuer- und regelbar.

Fig. 8a zeigt weiterhin exemplarisch eine Beutelnaht 19 im Querschnitt, die aus Lagen einer Verbundfolie gebildet ist, die z. B. Polymerschichten und zwischen den Polymerschichten angeordnete metallische oder nichtmetallische Schichten aufweist. In den Bereichen 21 ist die Beutelnaht 19 zweilagig, und in einem Bereich 20 zwischen den Bereichen 21 ist die Beutelnaht 19 vierlagig. Die vierlagige Anordnung der Beutelnaht 19 im Bereich 20 kann z. B. eine beabsichtigte Nahtgestaltung sein oder durch eine unbeabsichtigte und unerwünschte Faltung der Folienlagen in der Beutelnaht 19 im Bereich 20 hervorgerufen sein.

Fig. 8b zeigt eine Anzahl von Messkurven 22, die beim Herstellen der mehrlagigen Beutelnaht 19 mittels des in Fig. 8a gezeigten Fügewerkzeugs 1 aufgenommen wurden, insbesondere mittels der an den Oberflächen 2a, 2b angeordneten Dünnschichtsensoren 6a, 6b des Fügewerkzeugs 1. Die Dünnschichtsensoren 6a, 6b oder einige der Dünnschichtsensoren 6a, 6b können z. B. als Temperatursensoren ausgebildet sein. Die Messkurven 22 umfassen jeweils eine Vielzahl von Werten eines Messsignals als Funktion der Zeit. In Fig. 8b handelt es sich bei den Werten der Messkurven 22 z. B. um Temperaturwerte im Bereich der Fügenaht bzw. um Werte elektrischer Signale, die jeweils mit einem Temperaturwert korrelieren, also z. B. um eine Thermospannung. Selbstverständlich ist es denkbar, dass alternativ oder zusätzlich zu den in Fig. 8b gezeigten Temperaturwerten während des Fügeprozesses noch andere Prozessparameterwerte erfasst werden. Beispielsweise können die Dünnschichtsensoren 6a, 6b oder einige der Dünnschichtsensoren 6a, 6b alternativ oder zusätzlich Drucksensoren, Abstandssensoren oder Feuchtigkeitssensoren umfassen.

Die Auswerte- und Regeleinheit 17 ist eingerichtet, die mit den verschiedenen Dünnschichtsensoren 6a, 6b erfassten Prozessparameterwerte einzeln auszulesen und auszuwerten. Da die Dünnschichtsensoren 6a, 6b entlang der Oberflächen 2a, 2b der Werkzeughälften 1a, 1b verteilt angeordnet sind, kann auf diese Weise eine zeitlich und räumlich aufgelöste Erfassung des Prozessparameters Temperatur und/oder z. B. der weiteren Prozessparameter Druck, Abstand, Feuchtigkeit vorgenommen werden. So können Schwankungen der Dicke der Beutelnaht 19 detektiert werden, insbesondere die im vierlagigen Bereich 20 gegenüber den zweilagigen Bereichen 21 vergrößerte Dicke in der Beutelnaht 20.

In Fig. 8b sind zwei der Messkurven 22, nämlich die Messkurven 22' und 22" gesondert hervorgehoben. Bei der Messkurve 22' handelt es sich um eine während des Fügeprozesses u.a. mit dem Dünnschichtsensor 6a' aufgenommene Kurvenschar. Wie in Fig. 8a angedeutet, ist der Dünnschichtsensor 6a' während des Fügeprozesses im zweilagigen Bereich 21 der Beutelnaht 19 angeordnet und misst daher die Temperaturentwicklung im zweilagigen Bereich 21. Bei der Messkurve 22" handelt es sich um die während des Fügeprozesses mit dem Dünnschichtsensor 6a" aufgenommene Kurve. Wie in Fig. 8a angedeutet, ist der Dünnschichtsensor 6a" während des Fügeprozesses im vierlagigen Bereich 20 der Beutelnaht 19 angeordnet und misst daher die Temperaturentwicklung im vierlagigen Bereich 20.

Zu einem Zeitpunkt 23 wird die Beutelnaht 19 zwischen den Oberflächen 2a, 2b der Werkzeughälften 1a, 1b verpresst und kommt mit diesen in Kontakt, so dass zum Zeitpunkt 23 der Wärmeübertrag zwischen den beheizten Werkzeughälften 1a, 1b und der Beutelnaht 19 beginnt. Aufgrund der vergrößerten Dicke im vierlagigen Bereich 20 hat die Beutelnaht 19 beim Verpressen zwischen den Werkzeughälften 1a, 1b im vierlagigen Bereich 20 eine gegenüber dem nur zweilagigen Bereich 21 vergrößerte Wärmekapazität. Daher fällt die im vierlagigen Bereich 20 an der Werkzeugoberfläche 2a aufgenommene Messkurve 22" ab dem Zeitpunkt 23 stärker ab als die im zweilagigen Bereich 21 an der Werkzeugoberfläche 2a aufgenommene Messkurve 22'.

Die im zweilagigen Bereich 21 aufgenommene Messkurve 22' sinkt dann auf einen ersten Extremwert 24' ab, und die im vierlagigen Bereich 20 aufgenommene Messkurve 22" sinkt dann auf zweiten Extremwert 24" ab. Da im vierlagigen Bereich 20 mehr Wärme von der Werkzeughälfte 1a in die Beutelnaht 19 übertragen wird als im zweilagigen Bereich 21, ist der erste Extremwert 24' größer als der zweite Extremwert 24", d. h. die Temperatur an der Werkzeugoberfläche 2a fällt im vierlagigen Bereich 20 auf einen niedrigeren Wert als im zweilagigen Bereich 21. Die Messkurve 22' nimmt ihren Extremwert 24' zu einem Zeitpunkt 25' an, und die Messkurve 22" nimmt ihren Extremwert 24" erst zu einem späteren Zeitpunkt 25" an. Nach dem Abfall auf den Extremwert 24' bzw. 24" erfolgt der Anstieg der Messkurve 22' im zweilagigen Bereich 21 aufgrund der geringeren Wärmekapazität der Beutelnaht 19 im zweilagigen Bereich 21 schneller als der Anstieg der Messkurve 22" im vierlagigen Bereich 20.

Die Auswerte- und Regeleinheit 17 ist eingerichtet, die oben beschriebenen unterschiedlichen Charakteristiken der Messkurven 22', 22" zu bestimmen. Hier ist die Auswerte- und Regeleinheit 17 eingerichtet, die Vergrößerung der Dicke der Beutelnaht 19 im vierlagigen Bereich 20 gegenüber dem zweilagigen Bereich 21 zu detektieren. Beispielsweise ist die Auswerte- und Regeleinheit 17 eingerichtet zu detektieren, dass der Extremwert 24" einen vorgegebenen Referenzwert, der z. B. in etwa mit dem Extremwert 24' zusammenfallen kann, um mehr als eine vorgegebene zulässige Maximalabweichung unterschreitet. Die Auswerte- und Regeleinheit 17 kann auch eingerichtet sein zu detektieren, dass eine zeitliche Differenz zwischen den Zeitpunkte 25" und 23 einen weiteren vorgegebenen Referenzwert um mehr als eine weitere vorgegebene zulässige Maximalabweichung überschreitet. Die Auswerte- und Regeleinheit 17 kann dann ferner eingerichtet sein, abhängig von den erfassten Prozessparameterwerten und abhängig von den vorgegebenen Referenzwerten ein Warnsignal auszulösen, den Fügeprozess zu unterbrechen und/oder ein Aussondern des Beutels mit der fehlerhaften Beutelnaht 19 einzuleiten.

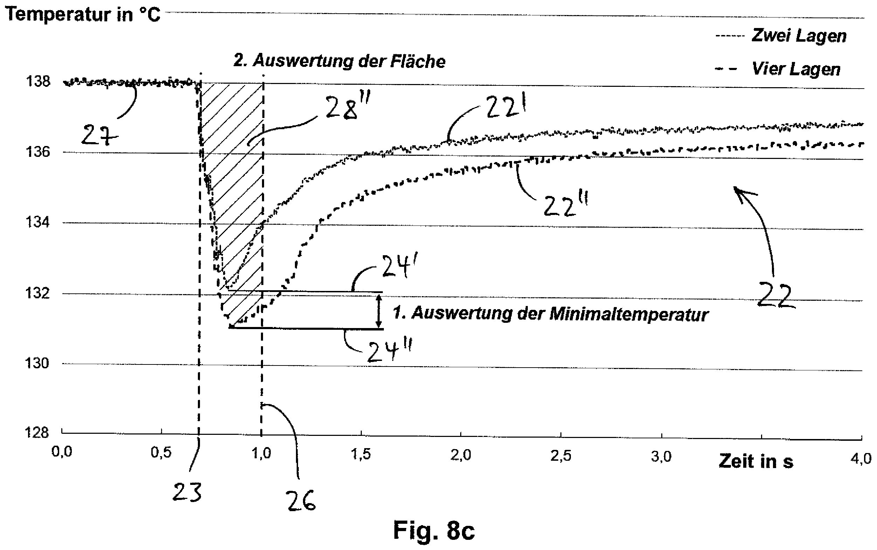

Fig. 8c zeigt eine weitere Darstellung der Messkurven 22', 22" aus Fig. 8b. Fig. 8c zeigt, dass die Auswerte- und Regeleinheit 17 zur Auswertung der Messkurven 22 ferner eingerichtet sein kann, ein oder mehrere durch die Messkurven 22 vorgegebenen Flächen zu bestimmen. Dies ist in Fig. 8c beispielhaft anhand einer durch die Messkurve 22" vorgegebenen Fläche 28" dargestellt. Die Fläche 28" ist diejenige Fläche, die die Messkurve 22" zwischen dem Zeitpunkt 23 und einem weiteren, z. B. vorgegebenen Zeitpunkt 26, der nach dem Zeitpunkt 23 liegt, mit einem gemessenen Temperaturwert 27 einschließt. Wie bereits weiter oben erläutert, ist der Zeitpunkt 23 derjenige Zeitpunkt, zu dem die Verpressung der Beutelnaht 19 zwischen den Werkzeughälften 1a, 1b beginnt, so dass beginnend mit dem Zeitpunkt 23 Wärme von den Werkzeughälften 1a, 1b in die Beutelnaht 19 abgeleitet wird. Der gemessene Temperaturwert 27 gibt z. B. die Temperatur an der Oberfläche 2a der Werkzeughälfte 1a wieder, und zwar bevor oder unmittelbar bevor der Fügeprozess mit dem Verpressen der Beutelnaht 19 zwischen den Werkzeughälften 1a, 1b beginnt. Der Zeitpunkt 26 kann z. B. derjenige Zeitpunkt sein, zu dem die Verpressung beendet wird, d. h., die Werkzeughälften 1a, 1b wieder auseinanderfahren.

Ebenso wie der Extremwert 24"oder die zeitlichen Differenzen zwischen den Zeitpunkten 25" und 23 (Fig. 8b) kann die Fläche 28" dazu dienen, Inhomogenitäten der Beutelnaht 19 zu detektieren. Auch die auf diese Weise bestimmte Fläche 28" kann z. B. mit einem Referenzwert verglichen werden, und abhängig von der Fläche 28" und dem Referenzwert kann die Auswerte- und Regeleinheit 17 z. B. ein Warnsignal auslösen, den Fügeprozess unterbrechen und/oder ein Aussondern des Beutels mit der fehlerhaften Beutelnaht 19 einleiten. Die Auswerte- und Regeleinheit 17 kann eingerichtet sein, der Fläche 28" entsprechende Flächen für jede der Messkurven 22 zu bestimmen.

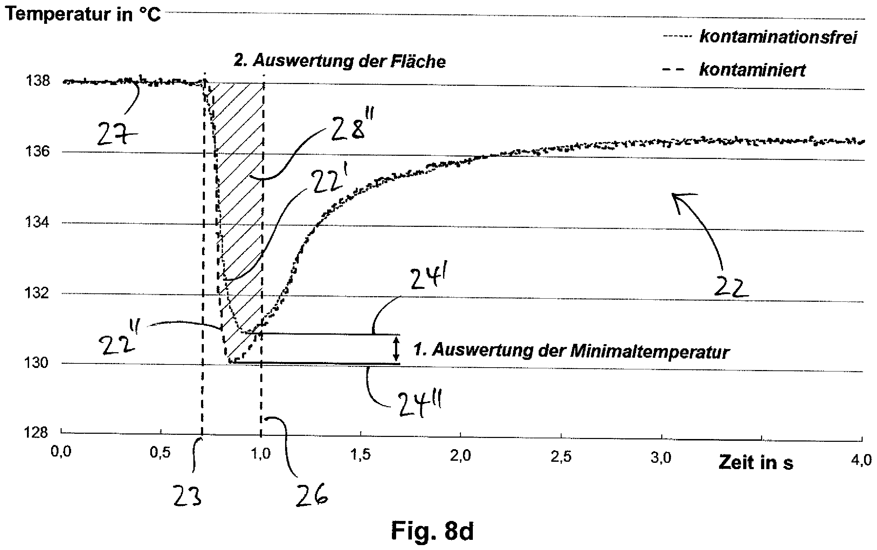

Fig. 8d zeigt wiederum Messkurven 22', 22", die mit der Fügevorrichtung 1 aus Fig. 8a beim Fügen z B. zweier polymerbasierter Verbundfolien aufgenommen wurden. Anders als im Fall der Figuren 8b, 8c wurden die Messkurven 22', 22" gemäß Fig. 8d jedoch nicht in Bereichen aufgenommen, in denen die zu fügenden Folien unterschiedliche Dicken haben. Stattdessen wurde die Messkurve 22" gemäß Fig. 8d in einem Bereich der zu fügenden Verbundfolien aufgenommen, in denen die Fügenaht durch zwischen den zu fügenden Verbundfolien angeordnetes Füllgut kontaminiert ist, z. B. durch einzelne Körner von Kaffeepulver. Die Messkurve 22' dagegen wurde in einem nicht kontaminierten Bereich der Fügenaht aufgenommen.

Wiederum ist erkennbar, dass sich die Extremwerte 24', 24" der Messkurven 22', 22" unterscheiden. Zudem kann der Inhalt der Fläche 28" wiederum dazu dienen, die Kontamination in der Fügenaht zu detektieren. Beispielsweise kann die Auswerte- und Regeleinheit 17 eingerichtet sein, eine Kontamination dann zu detektieren, wenn der Inhalt der Fläche 28" von einem vorgegebenen Referenzwert um mehr als eine vorgegebene zulässige Maximalabweichung abweicht.

Um eine hohe Qualität der hergestellten Fügenähte zu gewährleisten, können die Auswerte- und Regeleinheit 17 und die Stelleinheit 18 zudem eingerichtet sein, einen oder mehrere der genannten Prozessparameter (z. B. Temperatur; Druck auf die Werkzeughälften 1a, 1b; Abstand der Werkzeughälften 1a, 1b; Feuchtigkeit) abhängig von den mittels der Dünnschichtsensoren 6a, 6b erfassten Prozessparameterwerten und/oder abhängig von einem oder mehreren vorgegebenen Referenzwerten zu regeln. Wie anhand der Figuren 8b-d erläutert, bestimmt die Auswerte- und Regeleinheit 17 dazu noch während des Fügeprozesses eine Abweichung wenigstens eines Prozessparameterwertes, der mittels der Dünnschichtsensoren 6a, 6b oder mittels wenigstens eines der Dünnschichtsensoren 6a, 6b während des Fügeprozesses aufgenommen wird. Eine Nachregelung des Abstandes der Werkzeughälften 1a, 1b, des Druckes auf die Werkzeughälften 1a, 1b, oder einer Temperatur an den Werkzeugoberflächen 2a, 2b kann dann z. B. immer dann vorgenommen werden, wenn oder sobald die Abweichung oder der Absolutbetrag der Abweichung von dem Referenzwert größer ist als ein Schwellwert, durch den z. B. eine zulässige Maximalabweichung vorgegeben ist.

Der maßgebliche Vorteil der Erfindung besteht in der Messbarkeit von qualitätsentscheidenden Prozessgrößen inline und unmittelbar an der Fügezone. Dies liefert einen entscheidenden Beitrag zu Produktsicherheit, Prozess- und Ressourceneffizienz und zum Umweltschutz durch Vermeidung oder Reduzierung von Ausschussproduktion. Vor allem für das Wärmekontaktverfahren besteht damit erstmalig ein Inlinekontrollverfahren.

Weitere Wirkungen und Vorteile sind:
- unmittelbare, hinreichend zeit- und ortsaufgelöste Prozessüberwachung und Inlinequalitätskontrolle bei thermischen und nichtthermischen Fügeverfahren;
- Dokumentation der tatsächlichen (nicht nur der eingestellten) Prozessparameter und weiterer qualitätsindizierender Kenngrößen für die Validierung von Verarbeitungsprozessen, besonders im Bereich der pharmazeutischen Produktion;
- Gewährleistung einer unmittelbaren 100 % - Kontrolle anstelle nachgelagerter stichprobenartiger Tests;
- Wegfall von separaten manuellen oder maschinellen Kontrollprozessen;
- Minimierung von Ausschussproduktion bei Einrichte- und Anfahrvorgängen durch unmittelbare Identifikation des Zeitpunktes einer qualitätsgerechten Produktion;
- Definition von Ausschusskriterien und unmittelbare Ausschleusung von nicht qualitätsgerechten Produkten;
- Vermeidung von Stillständen durch rechtzeitige Erkennung von Kontaminationen oder Drift von Prozessparametern und /oder Parametern der zu verbindenden Materialien;
- schnelle Reaktion auf veränderte Produktionsgeschwindigkeiten, die v.a. eine Anpassung der Fügetemperatur erfordern, wodurch verbrannte oder unverschlossene Nähte entfallen;
- Erhöhung der Prozesstoleranz gegenüber Schwankungen oder Änderungen der zu verbindenden Materialien;
- Verbreiterung des Prozessfensters durch lokale Parameteranpassung z.B. im Bereich von Lagensprüngen;
- Sensorarray und Werkzeug sind in einer Baugruppe umgesetzt, daher nimmt die Qualitätskontrolle keinen zusätzlichen Bauraum innerhalb der Produktionslinie ein.

Potenzielle Einsatzszenarien für derartige Sensorsysteme erstrecken sich über das Fügen flexibler Materialien und die Detektion von Prozessabweichungen hinaus.
- Thermisches und nichtthermisches Verbinden polymerbasierter Materialien (z.B. Heißsiegeln);
- Thermisches und nichtthermisches Formen flexibler, polymerbasierter Materialien (z.B. Thermoformen von Kunststofffolien(verbunden), Tiefziehen von Papier- und Karton(verbunden), Spritzgießen, Heißprägen);
- Überwachung und Regelung z.B. der Temperatur, der Feuchte, des pH-Wertes von strömenden Medien, wie Getränke, Reinigungsmittel, Kühl- und Schmierstoffe;
- Messung der mechanischen oder tribologischen Beanspruchung bei Transportprozessen von flexiblen Materialien in der papier-, textil- und folienverarbeitenden Industrie;
- Herstellung, Verarbeitung und Verpackung von Lebensmitteln, Tiernahrung, Kosmetik, Pharmazeutika, Medizinprodukten, Nonfood;
- Herstellung von technischen Produkten, bei denen die flexiblen Materialien funktionstechnischer Bestandteil sein können, wie bei Energiespeichern (z.B. Li-Ion-, Li-Pol, S-Ion-Akkumulatoren), optoelektronischen Bauelementen (z.B. Solarzellen, OLED-Displays), Baumaterialien (z.B. Vakuum-isolationspanele), Medizinprodukten (z.B. Mikrofluidikbauteilen, Lab-on-Disc, Zellkultivierungskomponenten), Automobilkomponenten (z.B. Armaturenverkleidung), Luft- und Raumfahrtbauteile (z.B. Head-Up-Displays), etc.

## Patentansprüche

1. Fügevorrichtung (1), insbesondere zum kontaktbasierten Fügen flexibler Materialien, mit einer ersten Werkzeughälfte (1a) und mit wenigstens einem an einer Oberfläche (2a) der ersten Werkzeughälfte (1a) angeordneten ersten Dünnschichtsensor (6a), der wenigstens einen Abstandssensor und/oder wenigstens einen Temperatursensor und/oder wenigstens einen Feuchtigkeitssensor und/oder wenigstens einen ein piezoelektrisches Element enthaltenden Drucksensor umfasst, wobei der wenigstens eine erste Dünnschichtsensor (6a) eingerichtet ist, während eines Fügeprozesses wenigstens einen Prozessparameterwert wenigstens eines Prozessparameters vorzugsweise kontinuierlich zu erfassen.

2. Fügevorrichtung (1) nach Anspruch 1, **gekennzeichnet durch** eine mit dem wenigstens einen Dünnschichtsensor (6a) verbundene oder verbindbare Auswerteeinheit (17), die eingerichtet ist, eine Abweichung oder den Absolutbetrag der Abweichung des wenigstens einen Prozessparameterwertes oder eines von dem wenigstens einen Prozessparameterwert abgeleiteten Wertes, insbesondere eines Extremwertes, einer Kurvensteigung und/oder einer Standardabweichung, von wenigstens einem Referenzwert zu bestimmen und, wenn oder sobald die Abweichung oder der Absolutbetrag der Abweichung größer ist als ein Schwellwert, insbesondere größer als ein **durch** eine den wenigstens einen Referenzwert umschließende Hüllkurve vorgegebener Schwellwert,
a. ein Warnsignal auszulösen; und/oder
b. den Fügeprozess zu unterbrechen oder abzubrechen, auf den sich die Abweichung bezieht; und/oder
c. ein Aussondern des Materials einzuleiten, das in dem Fügeprozess gefügt wurde, auf den sich die Abweichung bezieht.

3. Fügevorrichtung (1) nach einem der vorhergehenden Ansprüche, **gekennzeichnet**
**durch** eine mit dem wenigstens einen Dünnschichtsensor (6a) verbundene oder verbindbare Auswerte- und Regeleinheit (17) und
**durch** wenigstens eine von der Auswerte- und Regeleinheit (17) steuerbare Stelleinheit (18) zum Beeinflussen des wenigstens einen Prozessparameters und/oder zum Beeinflussen wenigstens eines weiteren Prozessparameters;
wobei die Auswerte- und Regeleinheit (17) eingerichtet ist, eine Abweichung oder den Absolutbetrag einer Abweichung des wenigstens einen Prozessparameterwertes oder eines von dem wenigstens einen Prozessparameterwert abgeleiteten Wertes, insbesondere eines Extremwertes, einer Kurvensteigung und/oder einer Standardabweichung, von wenigstens einem Referenzwert zu bestimmen; und
wobei die Auswerte- und Regeleinheit (17) und die wenigstens eine Stelleinheit (18) eingerichtet sind, den wenigstens einen Prozessparameter und/oder den wenigstens einen weiteren Prozessparameter abhängig von dem wenigstens einen Prozessparameterwert und/oder abhängig von dem wenigstens einen Referenzwert zu regeln, insbesondere wenn oder sobald die Abweichung oder der Absolutbetrag der Abweichung größer ist als ein Schwellwert, insbesondere größer als ein durch eine den wenigstens einen Referenzwert einschließende Hüllkurve vorgegebener Schwellwert.

4. Fügevorrichtung (1) nach Anspruch 3, **dadurch gekennzeichnet,**
a. **dass** der Prozessparameter einen Druck umfasst und dass die Stelleinheit (18) eine Positionierungseinheit zum Einstellen einer Position der ersten Werkzeughälfte (1a) und/oder zum Einstellen einer Position einer zweiten Werkzeughälfte (1b), insbesondere zum Einstellen eines Abstandes der ersten Werkzeughälfte (1a) von der zweiten Werkzeughälfte (1b) umfasst; und/oder
b. **dass** der Prozessparameter eine Temperatur umfasst und dass die Stelleinheit (18) eine Temperiereinheit zum Beeinflussen einer Temperatur an der Oberfläche (2a) der ersten Werkzeughälfte (1a) und/oder zum Beeinflussen einer Temperatur an einer Oberfläche (2b) einer zweiten Werkzeughälfte (1b) umfasst.

5. Fügevorrichtung (1) nach einem der vorhergehenden Ansprüche, **dadurch gekennzeichnet,**
**dass** der wenigstens eine Prozessparameter einen Druck umfasst; und/oder
**dass** der wenigstens eine Prozessparameter eine Temperatur umfasst; und/oder
**dass** der wenigstens eine Prozessparameter eine Feuchtigkeit umfasst; und/oder
**dass** der wenigstens eine erste Dünnschichtsensor (6a) wenigstens einen Dehnungssensor aufweist und der wenigstens eine Prozessparameter eine Dehnung oder Verformung umfasst; und/oder
**gekennzeichnet durch** eine zweite Werkzeughälfte (1b), wobei der wenigstens eine Prozessparameter einen Abstand zwischen der ersten Werkzeughälfte (1a) und der zweiten Werkzeughälfte (1b) umfasst.

6. Fügevorrichtung (1) nach einem der vorhergehenden Ansprüche, **dadurch gekennzeichnet,**
**dass** an dem piezoelektrischen Element des wenigstens einen Drucksensors ein druckabhängiges elektrisches Signal abgreifbar oder detektierbar ist, insbesondere eine elektrische Spannung oder eine elektrische Stromstärke; und/oder
**dass** der wenigstens eine erste Dünnschichtsensor (6a) wenigstens ein induktives Element aufweist, an dem ein elektrisches Signal abgreifbar oder detektierbar ist, insbesondere eine elektrische Spannung oder eine elektrische Stromstärke, und/oder das einen druckabhängigen elektrischen Widerstand hat; und/oder
**dass** der wenigstens eine erste Dünnschichtsensor (6a) wenigstens einen elektrischen Leiter mit einem von einer mechanischen Verformung des elektrischen Leiters abhängigen elektrischen Widerstand aufweist; und/oder
**dass** der wenigstens eine erste Dünnschichtsensor (6a) wenigstens ein Thermoelement und/oder wenigstens ein Widerstandsthermometer aufweist; und/oder
**dass** der wenigstens eine erste Dünnschichtsensor (6a) wenigstens einen Kondensator mit feuchtigkeitsabhängiger Kapazität aufweist, der eine zwischen den Kondensatorplatten angeordnete hygroskopische Schicht umfasst; und/oder
**dass** der wenigstens eine erste Dünnschichtsensor (6a) wenigstens zwei Gleichstromelektroden aufweist, zwischen denen eine hygroskopische Schicht mit feuchtigkeitsabhängigem elektrischen Widerstand angeordnet ist.

7. Fügevorrichtung (1) nach einem der vorhergehenden Ansprüche, **gekennzeichnet durch** eine zweite Werkzeughälfte (1b) und einen an einer Oberfläche der zweiten Werkzeughälfte (1b) angeordneten zweiten Dünnschichtsensor (6b);
wobei die erste Werkzeughälfte (1a) und die zweite Werkzeughälfte (1b) zum Fügen von Materialien, insbesondere zum Fügen von polymerbasierten Verbundfolien, zwischen den Werkzeugoberflächen der ersten (1a) und der zweiten Werkzeughälfte (1b) ausgebildet sind;
wobei der erste und der zweite Dünnschichtsensor (6b) jeweils wenigstens eine Elektrode aufweisen; und
wobei der wenigstens eine Prozessparameter einen Abstand zwischen der ersten (1a) und der zweiten Werkzeughälfte (1b) und/oder eine elektrische und/oder magnetische Eigenschaft eines während eines Fügeprozesses zwischen der ersten (1a) und der zweiten Werkzeughälfte (1b) angeordneten Materials oder eines Materials der ersten (1a) oder der zweiten Werkzeughälfte (1b) umfasst, insbesondere eine Dielektrizität und/oder eine Magnetisierbarkeit und/oder einen elektrischen Widerstand des Materials, und wobei der Prozessparameterwert einen Wert einer mittels der Elektroden erfassbaren elektrischen Kapazität und/oder Induktivität oder eines mittels der Elektroden erfassbaren elektrischen Widerstandes des Materials umfasst.

8. Fügevorrichtung (1) nach einem der vorhergehenden Ansprüche, **dadurch gekennzeichnet, dass** der wenigstens eine erste Dünnschichtsensor (6a) und/oder dass der wenigstens eine zweite Dünnschichtsensor (6b) eine Vielzahl von Dünnschichtsensoren umfasst, die zum räumlich aufgelösten Erfassen des wenigstens einen Prozessparameterwertes räumlich verteilt an der Oberfläche der ersten und/oder der zweiten Werkzeughälfte (1b) angeordnet sind und einzeln auslesbar sind.

9. Fügevorrichtung (1) nach einem der vorhergehenden Ansprüche,
**gekennzeichnet durch** wenigstens eine Isolationsschicht zwischen der ersten Werkzeughälfte (1a) und dem wenigstens einen ersten Dünnschichtsensor (6a) und/oder zwischen der zweiten Werkzeughälfte (1b) und dem wenigstens einen zweiten Dünnschichtsensor (6b); und/oder
**gekennzeichnet durch** wenigstens eine Schutzschicht, die zum Schutz des wenigstens einen ersten Dünnschichtsensors (6a) an einer von der ersten Werkzeughälfte (1a) abgewandten Seite des wenigstens einen ersten Dünnschichtsensors (6a) aufgebracht ist und/oder die zum Schutz des wenigstens einen zweiten Dünnschichtsensors (6b) an einer von der zweiten Werkzeughälfte (1b) abgewandten Seite des wenigstens einen zweiten Dünnschichtsensors (6b) aufgebracht ist; und/oder
**gekennzeichnet durch** wenigstens eine Antihaftschicht, die an einer von der ersten Werkzeughälfte (1a) abgewandten Seite des wenigstens einen ersten Dünnschichtsensors (6a) aufgebracht ist und/oder die an einer von der zweiten Werkzeughälfte (1b) abgewandten Seite des wenigstens einen zweiten Dünnschichtsensors (6b) aufgebracht ist.

10. Fügeverfahren, insbesondere Fügeverfahren zum kontaktbasierten Fügen flexibler Materialien, umfassend die Schritte:
Erfassen, vorzugsweise kontinuierliches Erfassen, wenigstens eines Prozessparameterwertes eines Prozessparameters an einer Oberfläche (2a) wenigstens einer ersten Werkzeughälfte (1a) mittels wenigstens eines ersten Dünnschichtsensors (6a), der wenigstens einen Abstandssensor und/oder wenigstens einen Temperatursensor und/oder wenigstens einen Feuchtigkeitssensor und/oder wenigstens einen ein piezoelektrisches Element enthaltenden Drucksensor umfasst.

11. Fügeverfahren nach Anspruch 10, **dadurch gekennzeichnet, dass** der wenigstens eine Prozessparameter und der wenigstens eine Prozessparameterwert wenigstens umfassen:
einen Druck sowie einen Druckwert oder einen mit einem Druckwert korrelierten Wert; und/oder
eine Temperatur sowie einen Temperaturwert oder einen mit einem Temperaturwert korrelierten Wert; und/oder
eine Feuchtigkeit sowie einen Feuchtigkeitswert oder einen mit einem Feuchtigkeitswert korrelierten Wert; und/oder
eine Dehnung sowie einen Dehnungswert oder einen mit einem Dehnungswert korrelierten Wert; und/oder
eine Dicke und/oder eine Dielektrizitätskonstante eines in einem Fügewerkzeug eingelegten Materials sowie einen Wert einer elektrischen Kapazität oder einen mit einem Kapazitätswert korrelierten Wert; und/oder
eine Magnetisierbarkeit eines im Fügewerkzeug eingelegten Materials oder eines Materials der ersten oder der zweiten Werkzeughälfte (1b) sowie einen Induktivitätswert oder einen mit einem Induktivitätswert korrelierten Wert; und/oder
einen elektrischen Widerstand eines im Fügewerkzeug eingelegten Materials sowie einen Wert eines elektrischen Widerstandes oder einen mit einem elektrischen Widerstandswert korrelierten Wert; und/oder
eine elektrische Spannung sowie einen Spannungswert oder einen mit einem Spannungswert korrelierten Wert; und/oder
eine elektrische Stromstärke sowie einen Stromstärkewert oder einen mit einem Stromstärkewert korrelierten Wert; und/oder
einen Abstand zwischen der ersten Werkzeughälfte und einer zweiten Werkzeughälfte.

12. Fügeverfahren nach einem der Ansprüche 10 oder 11, **dadurch gekennzeichnet, dass** der wenigstens eine Prozessparameterwert eine Vielzahl von Prozessparameterwerten umfasst, die mittels einer Vielzahl von Dünnschichtsensoren (6a, 6b) zeitgleich oder sequentiell in verschiedenen Bereichen an der Oberfläche (2a) der ersten Werkzeughälfte (1a) und/oder an einer Oberfläche (2b) einer zweiten Werkzeughälfte (1b) erfasst werden.

13. Fügeverfahren nach einem der Ansprüche 10 bis 12, ferner umfassend die Schritte:
Bestimmen einer Abweichung oder eines Absolutbetrages der Abweichung des wenigstens einen Prozessparameterwertes oder eines von dem wenigstens einen Prozessparameterwert abgeleiteten Wertes, insbesondere eines Extremwertes (24', 24"), einer Kurvensteigung und/oder einer Standardabweichung, von wenigstens einem Referenzwert während eines Fügeprozesses, unmittelbar vor dem Fügeprozess oder unmittelbar nach dem Fügeprozess, vorzugsweise kontinuierliches Bestimmen der Abweichung oder des Absolutbetrages der Abweichung; und,
wenn oder sobald die Abweichung oder der Absolutbetrag der Abweichung größer ist als ein Schwellwert, insbesondere größer als ein durch eine den wenigstens einen Referenzwert umschließende Hüllkurve vorgegebener Schwellwert:
a. Auslösen eines Warnsignals; und/oder
b. Unterbrechen des Fügeprozesses, auf den sich die Abweichung bezieht; und/oder
c. Aussondern des Materials, das in dem Fügeprozess gefügt wird oder gefügt wurde, auf den sich die Abweichung bezieht; und/oder
d. Regeln des wenigstens einen Prozessparameters und/oder wenigstens eines weiteren Prozessparameters abhängig von dem wenigstens einen Prozessparameterwert und/oder abhängig von dem wenigstens einen Referenzwert, insbesondere wenn oder sobald die Abweichung oder der Absolutbetrag der Abweichung größer ist als ein Schwellwert, insbesondere größer als ein durch eine den wenigstens einen Referenzwert einschließende Hüllkurve vorgegebener Schwellwert.

14. Fügeverfahren nach einem der Ansprüche 10 bis 13, ferner umfassend die Schritte:
Regeln einer Position der ersten Werkzeughälfte (1a) und/oder einer zweiten Werkzeughälfte (1b), insbesondere Regeln eines Abstandes zwischen der ersten (1a) und der zweiten Werkzeughälfte (1b), und/oder Regeln eines auf die erste (1a) und/oder die zweite Werkzeughälfte (1b) ausgeübten Druckes, und zwar abhängig von dem wenigstens einen Prozessparameterwert und/oder von dem wenigstens einen Referenzwert.

15. Fügeverfahren nach einem der Ansprüche 10 bis 14, ferner umfassend die Schritte:
Regeln einer Temperatur an der Oberfläche (2a) der ersten Werkzeughälfte (1a) und/oder Regeln einer Temperatur an einer Oberfläche (2b) einer zweiten Werkzeughälfte (1b), und zwar abhängig von dem wenigstens einen Prozessparameterwert und/oder von dem wenigstens einen Referenzwert.

## Claims

1. A joining device (1), in particular for the contact-based joining of flexible materials, comprising a first tool half (1a) and at least one first thin film sensor (6a), which is arranged on a surface (2a) of the first tool half (1a) and comprises at least one distance sensor and/or at least one temperature sensor and/or at least one moisture sensor and/or at least one pressure sensor including a piezoelectric element, wherein the at least one first thin film sensor (6a) is configured to detect, preferably continuously, at least one process parameter value of at least one process parameter during a joining process.

2. The joining device (1) according to claim 1, **characterized by** an evaluation unit (17), which is connected or can be connected to the at least one thin film sensor (6a) and is configured to determine a deviation or the absolute magnitude of the deviation of the at least one process parameter value or of a value derived from the at least one process parameter value, and in particular of an extreme value, of a curve slope and/or of a standard deviation, from at least one reference value and, when or as soon as the deviation or the absolute magnitude of the deviation is greater than a threshold value, and in particular greater than a threshold value predefined by an envelope enclosing the at least one reference value,
a. to trigger a warning signal; and/or
b. to interrupt or terminate the joining process to which the deviation relates; and/or
c. to initiate discarding of the material that was joined in the joining process to which the deviation relates.

3. The joining device (1) according to any one of the preceding claims, **characterized by**
an evaluation and control unit (17), which is connected or can be connected to the at least one thin film sensor (6a);
at least one setting unit (18), which can be controlled by the evaluation and control unit (17), for influencing the at least one process parameter and/or for influencing at least one further process parameter,
wherein the evaluation and control unit (17) is configured to determine a deviation or the absolute magnitude of a deviation of the at least one process parameter value or of a value derived from the at least one process parameter value, in particular of an extreme value, of a curve slope and/or of a standard deviation, from at least one reference value; and
wherein the evaluation and control unit (17) and the at least one setting unit (18) are configured to control the at least one process parameter and/or the at least one further process parameter based on the at least one process parameter value and/or based on the at least one reference value, in particular when or as soon as the deviation or the absolute magnitude of the deviation is greater than a threshold value, and in particular greater than a threshold value predefined by an envelope enclosing the at least one reference value.

4. The joining device (1) according to claim 3, **characterized in that**
a. the process parameter includes a pressure, and the setting unit (18) comprises a positioning unit for setting a position of the first tool half (1a) and/or for setting a position of a second tool half (1b), and in particular for setting a distance between the first tool half (1a) and the second tool half (1b); and/or
b. the process parameter includes a temperature, and the setting unit (18) comprises a temperature control unit for influencing a temperature on the surface (2a) of the first tool half (1a) and/or for influencing a temperature on a surface (2b) of a second tool half (1b).

5. The joining device (1) according to any one of the preceding claims, **characterized in that**
the at least one process parameter includes a pressure; and/or
the at least one process parameter includes a temperature; and/or
the at least one process parameter includes a moisture; and/or
the at least one first thin film sensor (6a) comprises at least one strain sensor, and the at least one process parameter includes a strain or deformation; and/or
**characterized by** a second tool half (1b), wherein the at least one process parameter includes a distance between the first tool half (1a) and the second tool half (1b).

6. The joining device (1) according to any one of the preceding claims, **characterized in that**
a pressure-dependent electrical signal can be tapped or detected at the piezoelectric element of the at least one pressure sensor, in particular a voltage or an electric current; and/or
the at least one first thin film sensor (6a) comprises at least one inductive element at which an electrical signal can be tapped or detected, in particular a voltage or an electric current, and/or which has a pressure-dependent electrical resistance; and/or
the at least one first thin film sensor (6a) comprises at least one electrical conductor having an electrical resistance dependent on a mechanical deformation of the electrical conductor; and/or
the at least one first thin film sensor (6a) comprises at least one thermocouple and/or at least one resistance thermometer; and/or
the at least one first thin film sensor (6a) comprises at least one capacitor having a moisture-dependent capacitance, which comprises a hygroscopic layer arranged between the capacitor plates; and/or
the at least one first thin film sensor (6a) comprises at least two DC electrodes between which a hygroscopic layer having a moisture-dependent electrical resistance is arranged.

7. The joining device (1) according to any one of the preceding claims, **characterized by** a second tool half (1b) and a second thin film sensor (6b) arranged on a surface of the second tool half (1b);
wherein the first tool half (1a) and the second tool half (1b) are designed to join materials, and in particular to join polymer-based composite films, between the tool surfaces of the first tool half (1a) and of the second tool half (1b);
wherein the first and the second thin film sensor (6b) each comprise at least one electrode; and
wherein the at least one process parameter includes a distance between the first tool half (1a) and the second tool half (1b) and/or an electric and/or magnetic property of a material arranged, during a joining process, between the first tool half (1a) and the second tool half (1b) or of a material of the first tool half (1a) or of the second tool half (1b), and in particular a dielectricity and/or a magnetizability and/or an electrical resistance of the material, and wherein the process parameter value includes a value of an electrical capacitance and/or inductance detectable by way of the electrodes or of an electrical resistance of the material detectable by way of the electrodes.

8. The joining device (1) according to any one of the preceding claims, **characterized in that** the at least one first thin film sensor (6a) and/or the at least one second thin film sensor (6b) comprise a plurality of thin film sensors that are spatially distributed on the surface of the first tool half and/or second tool half (1b) for the spatially resolved detection of the at least one process parameter value and can be read out individually.

9. The joining device (1) according to any one of the preceding claims,
**characterized by** at least one insulating layer between the first tool half (1a) and the at least one first thin film sensor (6a) and/or between the second tool half (1b) and the at least one second thin film sensor (6b); and/or
**characterized by** at least one protective layer, which is disposed on a side of the at least one first thin film sensor (6a) facing away from the first tool half (1a) for the protection of the at least one first thin film sensor (6a) and/or is disposed on a side of the at least one second thin film sensor (6b) facing away from the second tool half (1b) for the protection of the at least one second thin film sensor (6b); and/or
**characterized by** at least one anti-adhesion coating, which is disposed on a side of the at least one first thin film sensor (6a) facing away from the first tool half (1a) and/or is disposed on a side of the at least one second thin film sensor (6b) facing away from the second tool half (1b).

10. A joining method, and in particular a joining method for the contact-based joining of flexible materials, comprising the following steps:
detecting, and preferably continuously detecting, at least one process parameter value of a process parameter on a surface (2a) of at least one first tool half (1a) by way of at least one first thin film sensor (6a), which comprises at least one distance sensor and/or at least one temperature sensor and/or at least one moisture sensor and/or at least one pressure sensor including a piezoelectric element.

11. The joining method according to claim 10, **characterized in that** the at least one process parameter and the at least one process parameter value include at least the following:
a pressure and a pressure value or a value correlated with a pressure value; and/or
a temperature and a temperature value or a value correlated with a temperature value; and/or
a moisture and a moisture value or a value correlated with a moisture value; and/or
a strain and a strain value or a value correlated with a strain value; and/or
a thickness and/or a relative permittivity of a material inserted into a joining tool, and a value of an electrical capacitance or a value correlated with a capacitance value; and/or
a magnetizability of a material inserted into the joining tool or of a material of the first or second tool half (1b), and an inductance value or a value correlated with an inductance value; and/or
an electrical resistance of a material inserted into the joining tool and a value of an electrical resistance or a value correlated with an electrical resistance; and/or
a voltage and a voltage value or a value correlated with a voltage value; and/or
an electric current and a current value or a value correlated with a current value; and/or
a distance between the first tool half and a second tool half.

12. The joining method according to either claim 10 or 11, **characterized in that** the at least one process parameter value includes a plurality of process parameter values, which are detected simultaneously or sequentially in different areas at the surface (2a) of the first tool half (1a) and/or at a surface (2b) of a second tool half (1b) by way of a plurality of thin film sensors (6a, 6b).

13. The joining method according to any one of claims 10 to 12, furthermore comprising the following steps:
determining a deviation or an absolute magnitude of a deviation of the at least one process parameter value or of a value derived from the at least one process parameter value, in particular of an extreme value (24', 24"), of a curve slope and/or of a standard deviation, from at least one reference value during a joining process, immediately before the joining process or immediately after the joining process, and preferably continuously determining the deviation or the absolute magnitude of the deviation; and
when or as soon as the deviation or the absolute magnitude of the deviation is greater than a threshold value, and in particular greater than a threshold value predefined by an envelope enclosing the at least one reference value:
a. triggering a warning signal; and/or
b. interrupting the joining process to which the deviation relates; and/or
c. discarding the material that is joined or was joined in the joining process to which the deviation relates; and/or
d. controlling the at least one process parameter and/or at least one further process parameter based on the at least one process parameter value and/or based on the at least one reference value, in particular when or as soon as the deviation or the absolute magnitude of the deviation is greater than a threshold value, and in particular greater than a threshold value predefined by an envelope enclosing the at least one reference value.

14. The joining method according to any one of claims 10 to 13, furthermore comprising the following steps:
controlling a position of the first tool half (1a) and/or of a second tool half (1b), and in particular controlling a distance between the first tool half (1a) and the second tool half (1b), and/or controlling a pressure exerted onto the first tool half (1a) and/or the second tool half (1b), and in particular based on the at least one process parameter value and/or based on the at least one reference value.

15. The joining method according to any one of claims 10 to 14, furthermore comprising the following steps:
controlling a temperature on the surface (2a) of the first tool half (1a) and/or controlling a temperature on a surface (2b) of a second tool half (1b), and in particular based on the at least one process parameter value and/or based on the at least one reference value.

## Revendications

1. Dispositif d'assemblage (1), plus particulièrement pour l'assemblage par contact de matériaux flexibles, avec une première moitié d'outil (1a) et avec au moins un premier capteur à couche mince (6a), disposé à une surface (2a) de la première moitié d'outil (1a), qui comprend au moins un capteur de distance et/ou au moins un capteur de température et/ou au moins un capteur d'humidité et/ou au moins un capteur de pression contenant un élément piézoélectrique, l'au moins un premier capteur à couche mince (6a) étant conçu pour mesurer, pendant un processus d'assemblage, au moins une valeur de paramètre de processus d'au moins un paramètre de processus, de préférence de manière continue.

2. Dispositif d'assemblage (1) selon la revendication 1, **caractérisé par** une unité d'analyse (17), reliée ou pouvant être reliée avec l'au moins un capteur à couche mince (6a), qui est conçue pour déterminer un écart ou la valeur absolue de l'écart entre l'au moins une valeur de paramètre de processus ou d'une valeur dérivée de l'au moins une valeur de paramètre de processus, plus particulièrement une valeur extrême, une pente de courbe et/ou un écart type, et au moins une valeur de référence et, lorsque ou dès que l'écart, ou la valeur absolue de l'écart, est supérieur à une valeur seuil, plus particulièrement supérieur à une valeur seuil prédéterminée par une courbe enveloppe entourant l'au moins une valeur de référence,
a. pour déclencher un signal d'avertissement ; et/ou
b. pour interrompre ou annuler le processus d'assemblage concerné par l'écart ; et/ou
c. pour initier un retrait du matériau qui a été assemblé dans le processus d'assemblage concerné par l'écart.

3. Dispositif d'assemblage (1) selon l'une des revendications précédentes, **caractérisé par** une unité d'analyse et de contrôle (17) reliée ou pouvant être reliée avec l'au moins un capteur à couche mince (6a) et
par au moins une unité de contrôle (18) pouvant être contrôlée par l'unité d'analyse et de contrôle (17) pour influencer l'au moins un paramètre de processus et/ou pour influencer au moins un autre paramètre de processus ;
l'unité d'analyse et de contrôle (17) étant conçue pour déterminer un écart ou la valeur absolue d'un écart entre l'au moins une valeur du paramètre de processus ou d'une valeur dérivée de l'au moins une valeur de paramètre de processus, plus particulièrement une valeur extrême, une pente de courbe et/ou un écart type, et au moins une valeur de référence ; et
l'unité d'analyse et de contrôle (17) et l'au moins une unité de contrôle (18) étant conçues pour contrôler l'au moins un paramètre de processus et/ou l'au moins un autre paramètre de processus en fonction de l'au moins une valeur de paramètre de processus et/ou en fonction de l'au moins une valeur de référence, plus particulièrement lorsque ou dès que l'écart, ou la valeur absolue de l'écart, est supérieur à une valeur seuil, plus particulièrement est supérieure à une valeur seuil prédéterminée par une courbe enveloppe entourant l'au moins une valeur de référence.

4. Dispositif d'assemblage (1) selon la revendication 3, **caractérisé en ce que**
a. le paramètre de processus comprend une pression et **en ce que** l'unité de contrôle (18) comprend une unité de positionnement pour le contrôle d'une position de la première moitié d'outil (1a) et/ou pour le contrôle d'une position d'une deuxième moitié d'outil (1b), plus particulièrement pour le contrôle d'une distance entre la première moitié d'outil (1a) et la deuxième moitié d'outil (1b) ; et/ou
b. le paramètre de processus comprend une température et **en ce que** l'unité de contrôle (18) comprend une unité de thermostat pour influencer une température à la surface (2a) de la première moitié d'outil (1a) et/ou pour influencer une température à une surface (2b) d'une deuxième moitié d'outil (1b).

5. Dispositif d'assemblage (1) selon l'une des revendications précédentes, **caractérisé en ce que**
l'au moins un paramètre de processus comprend une pression ; et/ou
l'au moins un paramètre de processus comprend une température ; et/ou
l'au moins un paramètre de processus comprend une humidité ; et/ou
l'au moins un premier capteur à couche mince (6a) comprend au moins un capteur de dilatation et l'au moins un paramètre de processus comprend une dilatation ou une déformation ; et/ou
**caractérisé par** une deuxième moitié d'outil (1b), l'au moins un paramètre de processus comprenant une distance entre la première moitié d'outil (1a) et la deuxième moitié d'outil (1b).

6. Dispositif d'assemblage (1) selon l'une des revendications précédentes, **caractérisé en ce que**
sur l'élément piézoélectrique de l'au moins un capteur de pression, un signal électrique dépendant de la pression peut être prélevé ou détecté, plus particulièrement une tension électrique ou une intensité de courant électrique ; et/ou
l'au moins un premier capteur à couche mince (6a) comprend un élément inductif au niveau duquel un signal électrique peut être prélevé ou détecté, plus particulièrement une tension électrique ou une intensité de courant électrique, et/ou qui présente une résistance électrique dépendant de la pression ; et/ou
l'au moins un premier capteur à couche mince (6a) comprend au moins un conducteur électrique avec une résistance électrique dépendant d'une déformation mécanique du conducteur électrique ; et/ou
l'au moins un premier capteur à couche mince (6a) comprend au moins un thermocouple et/ou au moins un thermomètre à résistance ; et/ou
l'au moins un premier capteur à couche mince (6a) comprend au moins un condensateur avec une capacité dépendant de l'humidité, qui comprend une couche hygroscopique disposée entre les plaques du condensateur ; et/ou
l'au moins un premier capteur à couche mince (6a) comprend au moins deux électrodes à courant continu entre lesquelles est disposée une couche hygroscopique avec une résistance électrique dépendant de l'humidité.

7. Dispositif d'assemblage (1) selon l'une des revendications précédentes, **caractérisé par** une deuxième moitié d'outil (1b) ou un deuxième capteur à couche mince (6b) disposé à une surface de la deuxième moitié d'outil (1b) ;
la première moitié d'outil (1a) et la deuxième moitié d'outil (1b) étant conçues pour l'assemblage de matériaux, plus particulièrement pour l'assemblage de films composites à base de polymères, entre les surfaces d'outil de la première (1a) et de la deuxième moitié d'outil (1b) ;
les premier et deuxième capteurs à couches minces (6b) comprenant chacun au moins une électrode ; et
l'au moins un paramètre de processus comprenant une distance entre la première (1a) et la deuxième moitié d'outil (1b) et/ou une propriété électrique et/ou magnétique d'un matériau disposé, au cours d'un processus d'assemblage, entre la première (1a) et la deuxième moitié d'outil (1b) ou d'un matériau de la première (1a) ou de la deuxième moitié d'outil (1b), plus particulièrement une constante diélectrique et/ou une capacité de magnétisation et/ou une résistance électrique du matériau, et la valeur du paramètre de processus comprenant une valeur d'une capacité et/ou inductance pouvant être mesurée au moyen des électrodes ou d'une résistance électrique du matériau pouvant être mesurée au moyen des électrodes.

8. Dispositif d'assemblage (1) selon l'une des revendications précédentes, **caractérisé en ce que** l'au moins un premier capteur à couche mince (6a) et/ou **en ce que** l'au moins un deuxième capteur à couche mince (6b) comprend une pluralité de capteurs à couches minces qui, pour la mesure à résolution spatiale de l'au moins une valeur de paramètre de processus, sont disposés de manière spatialement répartie à la surface de la première et/ou de la deuxième moitié d'outil (1b) et peuvent être lus individuellement.

9. Dispositif d'assemblage (1) selon l'une des revendications précédentes,
**caractérisé par** au moins une couche d'isolation entre la première moitié d'outil (1a) et l'au moins un premier capteur à couche mince (6a) et/ou entre la deuxième moitié d'outil (1b) et l'au moins un deuxième capteur à couche mince (6b) ; et/ou
**caractérisé par** au moins une couche de protection qui est appliquée, pour la protection de l'au moins un premier capteur à couche mince (6a), sur un côté de l'au moins un premier capteur à couche mince (6a) opposé à la première moitié d'outil (1a) et/ou qui est appliquée, pour la protection de l'au moins un deuxième capteur à couche mince (6b), sur un côté de l'au moins un deuxième capteur à couche mince (6b) opposé à la deuxième moitié d'outil (1b) ; et/ou
**caractérisé par** au moins une couche anti-adhérente qui est appliquée sur un côté de l'au moins un premier capteur à couche mince (6a) opposé à la première moitié d'outil (1a) et/ou qui est appliquée sur un côté de l'au moins un deuxième capteur à couche mince (6b) opposé à la deuxième moitié d'outil (1b).

10. Procédé d'assemblage, plus particulièrement procédé d'assemblage pour l'assemblage par contact de matériaux flexibles, comprenant les étapes suivantes :
mesure, de préférence mesure en continu, d'au moins une valeur de paramètre de processus d'un paramètre de processus à une surface (2a) d'au moins une première moitié d'outil (1a) au moyen d'au moins un premier capteur à couche mince (6a), qui comprend au moins un capteur de distance et/ou au moins un capteur de température et/ou au moins un capteur d'humidité et/ou au moins un capteur de pression contenant un élément piézoélectrique.

11. Procédé d'assemblage selon la revendication 10, **caractérisé en ce que** l'au moins un paramètre de processus et l'au moins une valeur de paramètre de processus comprennent au moins :
une pression ainsi qu'une valeur de pression ou une valeur corrélée avec une valeur de pression ; et/ou
une température ainsi qu'une valeur de température ou une valeur corrélée avec une valeur de température ; et/ou
une humidité ainsi qu'une valeur d'humidité ou une valeur corrélée avec une valeur d'humidité ; et/ou
une dilatation ainsi qu'une valeur de dilatation ou une valeur corrélée avec une valeur de dilatation ; et/ou
une épaisseur et/ou une constante diélectrique d'un matériau inséré dans un outil d'assemblage ainsi qu'une valeur d'une capacité électrique ou une valeur corrélée avec une valeur de capacité ; et/ou
une capacité de magnétisation d'un matériau inséré dans un outil d'assemblage ou d'un matériau de la première ou de la deuxième moitié d'outil (1b) ainsi qu'une valeur d'inductance ou une valeur corrélée avec une valeur d'inductance ; et/ou
une résistance électrique d'un matériau inséré dans un outil d'assemblage ainsi qu'une valeur d'une résistance électrique ou une valeur corrélée avec une valeur de résistance électrique ; et/ou
une tension électrique ainsi qu'une valeur de tension ou une valeur corrélée avec une valeur de tension ; et/ou
une intensité de courant électrique ainsi qu'une valeur d'intensité de courant électrique ou une valeur corrélée avec une valeur d'intensité de courant électrique ; et/ou
une distance entre la première moitié d'outil et une deuxième moitié d'outil.

12. Procédé d'assemblage selon l'une des revendications 10 ou 11, **caractérisé en ce que** l'au moins une valeur de paramètre de processus comprend une pluralité de valeurs de paramètres de processus qui sont mesurées au moyen d'une pluralité de capteurs à couche mince (6a, 6b) de manière simultanée ou séquentielle dans différentes zones sur la surface (2a) de la première moitié d'outil (1a) et/ou à une surface (2b) d'une deuxième moitié d'outil (1b).

13. Procédé d'assemblage selon l'une des revendications 10 à 12, comprenant en outre les étapes suivantes :
détermination d'un écart ou d'une valeur absolue de l'écart entre l'au moins une valeur de paramètre de processus ou une valeur dérivée de l'au moins une valeur de paramètre de processus, plus particulièrement une valeur extrême (24', 24"), une pente de courbe et/ou un écart type, et au moins une valeur de référence pendant un processus d'assemblage, immédiatement avant le processus d'assemblage ou immédiatement après le processus d'assemblage, de préférence la détermination en continu de l'écart ou de la valeur absolue de l'écart ; et
lorsque ou dès que l'écart, ou la valeur absolue de l'écart, est supérieur à une valeur seuil, plus particulièrement supérieur à une valeur seuil prédéterminée par une courbe enveloppe entourant l'au moins une valeur de référence :
a. déclenchement d'un signal d'alarme ; et/ou
b. interruption du processus d'assemblage concerné par l'écart ; et/ou
c. retrait du matériau qui est ou qui a été assemblé dans le processus d'assemblage concerné par l'écart ; et/ou
d. contrôle de l'au moins un paramètre de processus et/ou d'au moins un autre paramètre de processus en fonction de l'au moins une valeur de paramètre de processus et/ou en fonction de l'au moins une valeur de référence, plus particulièrement lorsque ou dès que l'écart, ou la valeur absolue de l'écart, est supérieur à une valeur seuil, plus particulièrement supérieur à une valeur seuil prédéterminée par une courbe enveloppe entourant l'au moins une valeur de référence.

14. Procédé d'assemblage selon l'une des revendications 10 à 13, comprenant en outre les étapes suivantes :
réglage d'une position de la première moitié d'outil (1a) et/ou d'une deuxième moitié d'outil (1b), plus particulièrement réglage d'une distance entre la première (1a) et la deuxième moitié d'outil (1b) et/ou réglage d'une pression exercée sur la première (1a) et/ou la deuxième moitié d'outil (1b), en fonction de l'au moins une valeur de paramètre de processus et/ou de l'au moins une valeur de référence.

15. Procédé d'assemblage selon l'une des revendications 10 à 14, comprenant en outre les étapes suivantes :
réglage d'une température à la surface (2a) de la première moitié d'outil (1a) et/ou réglage d'une température à une surface (2b) d'une deuxième moitié d'outil (1b), en fonction de l'au moins une valeur de paramètre de processus et/ou de l'au moins une valeur de référence.
